# EUROPÄISCHE PATENTSCHRIFT

(11) **EP 3 390 069 B1**
(45) Veröffentlichungstag und Bekanntmachung des Hinweises auf die Patenterteilung: **15.01.2020**
(21) Anmeldenummer: 16816247.7
(22) Anmeldetag: 13.12.2016
(51) Int. Cl.: B42D 25/455, B42D 25/46, B42D 25/47

(54) **VERFAHREN ZUR HERSTELLUNG EINES SICHERHEITSELEMENTS SOWIE TRANSFERFOLIE**
METHOD FOR PRODUCING A SECURITY ELEMENT AND TRANSFER FILM
PROCÉDÉ DE FABRICATION D'UN ÉLÉMENT DE SÉCURITÉ ET FILM DE TRANSFERT

(30) Priorität: 15.12.2015 DE 102015121849
(43) Veröffentlichungstag der Anmeldung: 24.10.2018
(73) Patentinhaber: OVD Kinegram AG, 6300 Zug (CH)
(72) Erfinder: CATHOMEN, Anja, 6443 Morschach (CH); NÉEL, Marjorie Annabelle, 6004 Luzern (CH)
(74) Vertreter: Louis Pöhlau Lohrentz
(86) Internationale Anmeldenummer: PCT/EP2016/080825
(87) Internationale Veröffentlichungsnummer: WO 2017/102744

(56) Entgegenhaltungen:
- WO-A2-2007/048563
- DE-B3-102008 062 149

## Beschreibung

Die Erfindung betrifft ein Verfahren zur Herstellung eines Sicherheitselements sowie eine Transferfolie, insbesondere eine Heißprägefolie, zum Transfer eines oder mehrerer Mehrschichtkörper auf ein Zielsubstrat.

Zur Applizierung eines Sicherheitselements auf Sicherheitsdokumente, beispielsweise Reisepässe, Kreditkarten oder Banknoten, werden u.a. Transferfolien, insbesondere Heißprägefolien eingesetzt. Dabei wird ein Sicherheitselement auf ein Substrat gebracht, das von der Dekorlage einer Heißprägefolie gebildet wird. Das Sicherheitselement umfasst dabei beispielsweise eine insbesondere transparente Lackschicht, in die eine Struktur, insbesondere zur Erzeugung eines optisch variablen Effektes, insbesondere eine beugungsoptisch wirksame Struktur abgeformt ist. Die transparente Lackschicht kann beispielsweise weiter mit einer die Reflexion erhöhenden Schicht versehen sein, bei der es sich um eine Metallschicht oder eine dielektrische Schicht handelt. Weiter weist das Sicherheitselement eine Klebstoffschicht auf, mittels der das Sicherheitselement auf das Substrat festgelegt ist. Hierzu wird die Heißprägefolie auf das Substrat aufgelegt und mittels eines Prägestempels unter Einwirkung von Wärme und Druck in dem Bereich auf die Decklage gepresst, in dem die Dekorlage der Heißprägefolie auf das Substrat zu transferieren ist. Beim Abziehen des Trägerfilms der Heißprägefolie haftet dieser Teilbereich der Dekorlage weiter am Substrat fest, die übrigen Teilbereiche der Dekorlage werden zusammen mit dem Trägerfilm abgezogen.

Bei einer derartigen Übertragung der Dekorlage einer Heißprägefolie von einem Trägerfilm auf ein Substrat wird die Dekorlage der Prägefolie entlang der Grenzlinie, die den zu übertragenden Teilbereich der Dekorlage definiert, zerrissen. Diese Grenzlinie kann beispielsweise durch die umlaufenden Außenkanten eines Prägestempels als Prägekontur definiert sein. Dies kann insbesondere bei der Verwendung von Transferfolien mit dickeren Schichten und Schichten mit speziellen Eigenschaften, beispielsweise Schichten mit besonders hoher Zähigkeit und/oder Sprödigkeit, zu Randausfransungen (als Positiv- und/oder Negativform) führen.

Um diese Probleme zu umgehen, ist es bekannt, eine weitere Trägerlage als Hilfsträger im Bereich der zu übertragenden Teilbereiche mit der Trägerlage der Heißprägefolie zu verkleben und die Heißprägefolie entlang des Umrisses der zu übertragenden Teilbereiche (sogenannte Patches) zumindest teilweise zu durchstanzen. Die nicht benötigten Teilbereiche können dann abgelöst werden. Die verbleibenden Teilbereiche können anschließend randscharf abgeprägt werden.

Bei dieser Technologie besteht das Problem, dass der dort verwendete partiell aufgebrachte UV-Klebstoff in einem etwas größeren Bereich aufgebracht wird als der gestanzte Patch groß ist, um Registerschwankungen beim UV-Klebstoffdruck aufzufangen, damit auf jeden Fall der komplette Patch mit dem UV-Klebstoff bedeckt ist. Daher existiert ein Klebstoff-Rand rund um den Patch im ausgestanzten Zustand.

Unter Register oder Passer bzw. Registergenauigkeit oder Passergenauigkeit ist eine Lagegenauigkeit zweier oder mehr Elemente und/oder Schichten, hier insbesondere des Substrats und der Prägefolie und/oder des Dekorabschnitts zueinander zu verstehen. Dabei soll sich die Registergenauigkeit innerhalb einer vorgegebenen Toleranz bewegen und dabei möglichst gering sein. Gleichzeitig ist die Registergenauigkeit von mehreren Elementen und/oder Schichten zueinander ein wichtiges Merkmal, um die Prozesssicherheit zu erhöhen. Die lagegenaue Positionierung kann dabei insbesondere mittels sensorisch, vorzugsweise optisch detektierbarer Passermarken oder Registermarken erfolgen. Diese Passermarken oder Registermarken können dabei entweder spezielle separate Elemente oder Bereiche oder Schichten darstellen oder selbst Teil der zu positionierenden Elemente oder Bereiche oder Schichten sein.

Dieser UV-Klebstoff erfüllt dabei eine Doppelfunktion. Während der Applikation der Folie soll der UV-Klebstoff den Hilfsträger und den Träger fest zusammenhalten, um das Abziehen des Hilfsträgers und des Trägers gleichzeitig von der applizierten Transferlage zu gewährleisten. Während der Verarbeitung/Herstellung der Folie soll der UV-Klebstoff der zu übertragende Teilbereich an Ort und Stelle fixieren (zum Beispiel bei Umrollvorgängen) aber auch das Abziehen der nicht benötigten Teilbereiche erlauben, d.h. seine Haftkraft, insbesondere am Klebstoffrand soll doch nicht zu groß sein.

Der UV-Klebstoff wird daher nur teilweise durchgehärtet, d.h. obwohl dieser Klebstoff UV-gehärtet ist, weist er eine Restklebrigkeit auf und diese tritt bei der weiteren Applikation nachfolgend störend in Erscheinung, insbesondere im Bereich des zuvor erwähnten überstehenden Klebstoffrandes. Die Restklebrigkeit kann auch erst durch einen Wärmeeintrag beim Heißprägen oder bei anderen Produktionsschritten gebildet werden, beispielsweise bei vorher unzureichender Härtung oder generell zu geringer Temperaturbeständigkeit des Klebstoffs Die erwähnte Restklebrigkeit kann jedoch auch bei UV-Klebstoffen auftreten, die weitgehend vollständig ausgehärtet wurden.

Zudem reicht die Haftung des UV-Klebstoffs zwischen Hilfsträger und Träger während der Applikation nicht immer aus, um die Transferlagen allein zu übertragen, und es wird dann der gesamte Patch inklusive der Trägerlage übertragen, die sich in ungewünschter Weise von dem Hilfsträger ablöst.

Aus der internationalen Patentanmeldung WO 2007/048563 A2 ist ein Verfahren zum Transfer eines Mehrschichtkörpers auf ein Substrat mittels einer Transferfolie bekannt.

Der Erfindung liegt nun die Aufgabe zugrunde, ein verbessertes Verfahren zur Herstellung eines Dekorelements bzw. eines Sicherheitselements sowie eine verbesserte Transferfolie anzugeben.

Diese Aufgabe wird durch ein Verfahren mit den Merkmalen von Patentanspruch 1 und eine Transferfolie mit den Merkmalen von Patentanspruch 46 gelöst.

Ein solches Verfahren zur Herstellung eines Sicherheitselements zeichnet sich dadurch aus, dass bei dem Verfahren eine Grundfolie bereit gestellt wird, die eine erste Trägerfolie und eine ein- oder mehrschichtige Dekorlage aufweist,
- wobei auf eine zweite Trägerfolie eine erste Klebstoffschicht aufgebracht wird und auf die von der Dekorlage abgewandte Oberfläche der ersten Trägerfolie eine zweite Klebstoffschicht aufgebracht wird, oder wobei die zweite Klebstoffschicht auf die von der Dekorlage abgewandte Oberfläche der ersten Trägerfolie aufgebracht wird und die erste Klebstoffschicht auf die zweite Klebstoffschicht aufgebracht wird,
- und wobei die zweite Trägerfolie auf die erste Trägerfolie aufgebracht wird derart, dass die erste Klebstoffschicht und die zweite Klebstoffschicht zwischen der ersten Trägerfolie und der zweiten Trägerfolie angeordnet sind,
- und wobei die erste Klebstoffschicht in einem ersten Bereich, der mindestens einen ersten Teilbereich der Grundfolie zumindest teilweise überdeckt, aktiviert wird und in einem an diesen Bereich angrenzenden zweiten Bereich die erste Klebstoffschicht jedoch nicht aktiviert, nicht vorgesehen, lediglich teilweise vorgesehen oder deaktiviert wird,
- wobei die erste Trägerfolie entlang der den mindestens einen ersten Teilbereich definierenden und den mindestens einen ersten Teilbereich von einem zweiten Teilbereich der Grundfolie trennenden Grenzlinie mindestens teilweise durchtrennt wird, und
- wobei ein den zweiten Teilbereich umfassender zweiter Teil der Grundfolie von der zweiten Trägerfolie abgezogen wird, wobei in dem mindestens einen ersten Teilbereich die Grundfolie aufgrund der aktivierten ersten Klebstoffschicht an der zweiten Trägerfolie haftet und ein den mindestens einen ersten Teilbereich

umfassender erster Teil der Grundfolie auf der zweiten Trägerfolie verbleibt.

Ein Klebstoff kann ein Polymer, beispielsweise ein Lack als flüssiger, pastöser oder auch pulverförmiger Beschichtungsstoff sein, der dünn auf Oberflächen aufgetragen wird und durch chemische und/oder physikalische Vorgänge einen insbesondere durchgehenden Film bildet.

Man erhält so eine Transferfolie, insbesondere Heißprägefolie, zum Transfer eines oder mehrerer Mehrschichtkörper auf ein Zielsubstrat, wobei die Transferfolie eine Grundfolie aufweist, welche eine erste Trägerfolie und eine ein- oder mehrschichtige Dekorlage aufweist, wobei
- die Transferfolie weiter eine zweite Trägerfolie mit einer ersten Klebstoffschicht und eine auf die von der Dekorlage abgewandte Oberfläche der ersten Trägerfolie aufgebrachte zweite Klebstoffschicht aufweist, wobei die erste Klebstoffschicht und die zweite Klebstoffschicht zwischen der ersten Trägerfolie und der zweiten Trägerfolie angeordnet sind, und wobei
- die erste Klebstoffschicht in einem mindestens einen ersten Teilbereich der Grundfolie zumindest teilweise überdeckenden ersten Bereich aktiviert ist, so dass die Grundfolie in dem mindestens einen ersten Teilbereich an der zweiten Trägerfolie haftet, und in einem an dem mindestens einen ersten Teilbereich angrenzenden zweiten Teilbereich jedoch nicht aktiviert, nicht vorgesehen, lediglich teilweise vorgesehen oder deaktiviert ist, und wobei
- die erste Trägerfolie entlang der den mindestens einen ersten Teilbereich definierenden und den mindestens einen ersten Teilbereich von einem zweiten Teilbereich der Grundfolie trennenden Grenzlinie durchtrennt und ein den zweiten Teilbereich umfassender Teil der Grundfolie von der zweiten Trägerfolie abgezogen ist.

Hierdurch ist es möglich, ein Sicherheitselement bereit zu stellen, welches mittels eines üblichen Transferverfahrens auf ein Sicherheitsdokument, beispielsweise eine Banknote oder ein ID-Dokument, transferiert werden kann und welches ein durch das Brechen der Dekorlage im Randbereich des transferierten Mehrschichtkörpers entstehendes "Ausfransen" vermeidet. Weiter ist es möglich, dass die Haft- und Struktureigenschaften der Dekorlage im Wesentlichen unabhängig von den Anforderungen des Transfer-Prozesses gewählt werden können und so beispielsweise die optischen Eigenschaften, die Beständigkeit gegenüber Umwelteinflüssen sowie die Sicherheit gegenüber Nachahmung und Manipulation des Sicherheitselements weiter verbessert werden können. Insbesondere können so besonders spröde oder dicke oder zähe Schichten in der Dekorlage transferiert werden. Weiter zeichnet sich das erfindungsgemäße Verfahren dadurch aus, dass die Passergenauigkeit, mit der Sicherheitselemente auf ein Zielsubstrat transferiert werden können, weiter verbessert wird.

Im Sinne der Erfindung ist unter Transferfolie ganz allgemeine eine Folie zu verstehen, die eine Trägerlage bzw. Trägerfolie und eine Transferlage aufweist, wobei die Transferlage, die insbesondere wenigstens eine Dekorlage aufweist, von der Trägerlage ablösbar ist. Die Ablösung erfolgt insbesondere in einer Prägevorrichtung, wobei wenigstens ein Teil der Transferfolie auf ein zu dekorierendes Substrat übertragen wird und im Anschluss die Trägerlage von der applizierten Transferlage abgezogen wird.

Die Grundfolie kann sowohl als Transferfolie wie auch als Laminierfolie ausgebildet sein. Ist die Grundfolie als Transferfolie ausgebildet, dann wird insbesondere die Dekorlage der Grundfolie auf ein Substrat übertragen und im Anschluss wird die erste Trägerfolie davon abgezogen und verbleibt bevorzugt auf der zweiten Trägerfolie. Hierbei ist besonders bevorzugt eine Ablöseschicht zwischen Dekorlage und erster Trägerfolie angeordnet.

Ist die Grundfolie als Laminierfolie ausgebildet, dann werden insbesondere die Dekorlage und die erste Trägerfolie der Grundfolie auf ein Substrat übertragen und im Anschluss wird die zweite Trägerfolie davon abgezogen. Hierbei ist besonders bevorzugt ein Ablösesystem zwischen der ersten und der zweiten Trägerfolie angeordnet.

Zudem können unterschiedliche Formen der Transferfolie mit einer gleich bleibenden Stempelform übertragen werden. Es ist auch möglich, mehrere, benachbarte, isolierte Patches mittels eines einzigen Stempels zu übertragen. Die äußere Form des Patches muss nicht mit der äußeren Form des Heißprägestempels übereinstimmen. Vorzugsweise wird hierbei der Heißprägestempel größer als der zu transferierende Teil der Grundfolie gewählt. Beispielsweise wird ein Patch in Sternform mit einem runden, den Stern mehr als vollständig überdeckenden, größeren Stempel übertragen. Neben einem Heißprägestempel, mit dem eine Heißprägung mittels Prägedruck und Wärme durchgeführt wird, kann auch eine Ultraschallprägestempel mit entsprechend gestaltetem Gegendrucklager Anwendung finden, mit dem eine Heißprägung mittels Prägedruck und Ultraschall als alternative Energieform durchgeführt wird. Ebenfalls möglich ist die Verwendung eines Rollenlaminators, insbesondere eines semirotativen Laminators und/oder Mehrrollenlaminators (beispielsweise sind für Banknotenanwendungen mehrere Laminationsrollen in Reihe hintereinander angeordnet). Weiterhin ist es möglich, die erste Trägerfolie mit Hilfe einer Umlenkwalze nahe an die mit UV-Klebstoff bedruckte zweite Trägerfolie heranzuführen, ohne beide Trägerfolien aneinanderzupressen. Zusätzliche, nachfolgende Umlenkwalzen sorgen dann für den nötigen Kontakt beider Trägerfolien vor der Aushärtung mit UV-Licht.

Es ist dabei auch möglich, dass der zweite Teilbereich nicht zusammenhängend ist oder auch Unterbereiche aufweist, in denen der gesamte Folienverbund entfernt wird. Beispielsweise kann in einer Ausführungsform jeder Patch zumindest einen umschlossenen Freiraum aufweisen, beispielsweise ein Loch in der Mitte. Das Loch (generell sind alle Formen möglich) dieser Form wird beispielsweise ebenso während des Stanzvorgangs erzeugt. Dabei besitzt das Stanzblech beispielsweise zwei Stanzhöhen; eine, um nur die Dekorlage für die Freistellung von ersten Bereiche und den ggf. vorhandenen beizubehaltenden Markenbereich zu durchtrennen und eine weitere, höhere um den gesamten Folienverbund zu durchtrennen und damit ein Loch zu erzeugen. Auch Lasern mit verschiedenen Einstellungen für Kiss-Cut und Durchstanzen ist prinzipiell möglich. Die dabei entstehenden Folienbruchstücke werden meist aus dem Folienverbund herausgedrückt oder ausgeblasen. In diesem Teilbereich wird also der gesamte Folienverbund entfernt.

Die Vorteile solcher Löcher oder Durchbrechungen liegen in einer Verbesserung der Zwischenschichthaftung, wenn der zu übertragende Teilbereich, insbesondere in der späteren Anwendung des Sicherheitselements, zwischen zwei Deckschichten liegt. Ferner kann ein solches Loch als Ersatz und/oder Ergänzung eines optisch transparenten Teilbereichs in dem Motiv dienen. Durch diese Löcher oder Durchbrechungen wird die Filigranität des zu übertragenden Teilbereichs erhöht und damit auch seine Fälschungssicherheit verbessert. Mögliche Motive für die geometrische Gestaltung der Löcher bzw. Durchbrechungen sind alphanumerische Zeichen wie zum Beispiel A, B, D, O, R, 8, 9 6, 0.

Durch die zweite Klebstoffschicht können dabei die eingangs genannten Nachteile der einfachen Verklebung mit einem UV-Klebstoff überwunden werden. Insbesondere können dabei Klebstoffe mit unterschiedlichen Haft- und/oder Aktivierungseigenschaften verwendet werden. Die erste Klebstoffschicht dient dabei lediglich zum leichten Verbinden der beiden Trägerlagen während der Verarbeitung. Die zweite Klebstoffschicht wird bevorzugt erst beim Prägen thermisch aktiviert und erhöht dann die Haftung zwischen den Trägerlagen, so dass diese nach dem Prägen gemeinsam von dem übertragenen Teil der Dekorlage abgelöst werden können. Dies ermöglicht es insbesondere auch, die erste Klebstoffschicht so aufzubringen, dass sie sich nicht über den zu übertragenden Teilbereich hinaus erstreckt, so dass sich später die oben genannten Probleme durch Restklebrigkeit nicht ergeben. Bevorzugt ist die erste Klebstoffschicht also kleiner als der zu übertragende Teilbereich. Prinzipiell fixiert die erste Klebstoffschicht den zu übertragenden Teilbereich an Ort und Stelle, wobei dies auch mit einem vergleichsweise kleinen Klebstoffpunkt erfolgen kann. Dieser kann auch sehr viel kleiner als der zu übertragende Teilbereich sein, sodass die relative Lage zwischen zu übertragendem Teilbereich und der ersten Klebstoffschicht nicht kritisch ist.

Die zweite Trägerfolie kann sowohl einlagig als auch mehrlagig sein. Die Lagen können aus unterschiedlichen oder gleichen Materialien bestehen, beispielsweise aus Papier und/oder Gewebe und/oder Teslin® und/oder gleichen oder unterschiedlichen Kunststoffschichten. Sie können miteinander verklebt sein oder zum Beispiel durch Koextrusion oder durch Mehrfachbeschichtungen hergestellt sein.

Bevorzugt werden also für die erste und zweite Klebstoffschicht unterschiedliche, insbesondere unterschiedlich aktivierbare Klebstoffe verwendet. Insbesondere ist es vorteilhaft, für die erste Klebstoffschicht einen strahlungsaktivierbaren Klebstoff und für die zweite Klebstoffschicht einen thermisch aktivierbaren Klebstoff zu verwenden. Ein thermisch aktivierbarer Klebstoff kann sowohl reaktiv als auch nicht reaktiv sein. Zudem sind mehrschichtige Aufbauten möglich. Neben strahlungsaktivierbaren Klebstoffen sind auch andere reaktive Arten von Klebstoffen, wie zum Beispiel Ein- und Zwei-Komponentensysteme (Epoxysysteme und/oder beispielsweise mit Isocyanaten als Initiator für eine Polymerisation bzw. Vernetzung) möglich.

Hierbei ist es vorteilhaft, wenn die zweite Klebstoffschicht beim Heißprägen des ersten Teils der Grundfolie auf ein Substrat aktiviert wird. Vor dem Heißprägen weist die zweite Klebstoffschicht also bevorzugt keine Klebrigkeit auf. Beim Heißprägen und der Aktivierung erhöht sich dann die Zwischenschichthaftung zwischen den Trägerlagen, bevorzugt um mehr als 50%, bevorzugt mehr als 100%, besonders bevorzugt mehr als 200%.

Dabei ist es bevorzugt, wenn das Heißprägen bei einer Temperatur von 80°C bis 300°C, bevorzugt von 100°C bis 240°C, besonders bev orzugt von 100°C bis 180°C und/oder mit einem Prägedruck von 10 N/cm² bis 10000 N/cm², bevorzugt von 100 N/cm² bis 5000 N/cm² und/oder mit einer Prägezeit von 0,01s bis 2s, bevorzugt von 0,01s bis 1s, erfolgt.

Weiter ist es vorteilhaft, wenn die zweite Klebstoffschicht vor dem Aufbringen der zweiten Trägerfolie auf die Grundfolie getrocknet wird. Hierdurch wird sichergestellt, dass die zweite Klebstoffschicht vor dem Heißprägen keine Klebrigkeit aufweist. Es können auch variierende Flächenbelegungen der zweiten Klebstoffschicht (zum Beispiel im ersten Teilbereich unterschiedliche Flächenbelegungen im Innen- oder Außenbereich) zum Einsatz kommen. Ferner ist es vorteilhaft, wenn die zweite Klebstoffschicht in einem Raster, insbesondere einem Linienraster oder Punktraster mit einer Rasterdichte von 40 bis 80 Linien pro cm aufgebracht wird.
Besonders bevorzugt ist es, wenn die zweite Klebstoffschicht aus einem thermoplastischen Klebstoff mit einer Glasübergangstemperatur von 50°C bis 150°C, bevorzugt von 100°C bis 120°C gebildet wird. Die zw eite Klebstoffschicht kann mehrschichtig aufgebaut sein.

Es ist zweckmäßig, wenn die zweite Klebstoffschicht mit einem Flächengewicht von 0,1 g/m² bis 10 g/m², bevorzugt von 2 g/m² bis 5 g/m² aufgetragen wird.

Ferner ist es vorteilhaft, wenn die erste Klebstoffschicht in einem Raster, insbesondere einem Linienraster oder Punktraster mit einer Rasterdichte von 40 bis 80 Linien pro cm aufgebracht wird. Es können auch variierende Flächenbelegungen der ersten Klebstoffschicht (zum Beispiel im ersten Teilbereich unterschiedliche Flächenbelegungen im Innen- oder Außenbereich) zum Einsatz kommen.

Es ist dabei zweckmäßig, wenn die erste Klebstoffschicht im Bereich des gedruckten Rasters mit einer Schichtdicke von 0,01 µm bis 10 µm, bevorzugt von 2 µm bis 5 µm aufgetragen wird.

Durch die nur partielle Applikation der ersten Klebstoffschicht wird sichergestellt, dass die zweite Klebstoffschicht direkten Kontakt zu beiden Transferlagen hat und so auf die gewünschte Art die Haftung erhöhen kann.

Bevorzugt weist die Grundfolie eine zwischen der ersten Trägerfolie und der Dekorlage angeordnete Ablöseschicht auf. Weiter ist es auch möglich, dass das Material bzw. die Oberflächenbeschaffenheit der ersten Trägerfolie und der der ersten Trägerfolie zugewandten Schicht der Dekorlage so gewählt sind, dass die Dekorlage von der ersten Trägerfolie ablösbar ist. Hierdurch wird ermöglicht, dass mittels der erfindungsgemäßen Transferfolie ein Teilbereich eines Folienkörpers auf ein Zielsubstrat appliziert werden kann, der lediglich einen Teilbereich der Dekorlage und - optional - eine Klebstoffschicht umfasst und nicht den zugeordneten Teilbereich der ersten Trägerfolie mit umfasst. Dies ist insbesondere dann von Vorteil, wenn dünne und mechanische in sich nicht stabile Schichtlagen auf das Zielsubstrat transferiert werden sollen.

Gemäß einer weiteren bevorzugten Ausführungsform ist zwischen der ersten Trägerfolie und der Dekorlage keine Ablöseschicht enthalten. Gemäß dieser Ausführungsform wird die erste Klebstoffschicht und eine zwischen der Dekorlage und dem Zielsubstrat angeordnete zweite Klebstoffschicht so gewählt, dass die durch die aktivierte erste Klebstoffschicht zwischen der ersten Trägerfolie und der zweiten Trägerfolie bewirkte Klebekraft geringer als die zwischen der Dekorlage und dem Zielsubstrat durch die aktivierte zweite Klebstoffschicht bewirkte Klebekraft ist. Hierdurch ist es möglich, nach Aktivieren der zweiten Klebstoffschicht die zweite Trägerfolie von dem ersten Teilbereich der Grundfolie abzuziehen und damit den gesamten ersten Teilbereich der Grundfolie, d.h. Dekorlage und erste Trägerschicht auf das Zielsubstrat mittels eines Transferprozesses zu applizieren. Mittels des erfindungsgemäßen Verfahrens ist es somit möglich, mechanisch stabile Folienkörper auf ein Zielsubstrat zu transferieren. Die hierdurch erreichte Stabilität beim Übertrag ermöglicht auch das Übertragen von Bereichen, in die zusätzliche Hilfsstanzungen als Sollbruchstellen enthalten. Hierbei ist es weiter auch möglich, diese Folienkörper nicht nur in Form eines Streifens, sondern in beliebiger Formgebung, beispielsweise als Patch, auf eine Banknote zu transferieren.

Ferner kann vorgesehen sein, dass zwischen der ersten Trägerfolie und der zweiten Trägerfolie ein Ablösesystem vorgesehen ist. Das Ablösesystem kann dabei sowohl auf die erste Trägerfolie als auch auf die zweite Trägerfolie aufgebracht werden. Die Klebstoffschichten sind hierbei bevorzugt entweder zwischen der zweiten Trägerfolie und dem Ablösesystem oder zwischen der ersten Trägerfolie und dem Ablösesystem angeordnet. Bei Applikation auf ein Zielsubstrat kann das Ablösesystem zusammen mit der Dekorlage und der ersten Trägerfolie komplett oder nur teilweise, bevorzugt nur einzelne Schichten des Ablösesystems, auf das Zielsubstrat appliziert werden. Es ist aber auch möglich, dass das Ablösesystem bei Applikation der Folie auf ein Zielsubstrat auf der zweiten Trägerfolie verbleibt und nach Applikation zusammen mit der zweiten Trägerfolie vom Zielsubstrat abgezogen wird.

Hierdurch wird ermöglicht, dass bei der Applikation wenigstens eines ersten Teilbereichs bzw. eines Mehrschichtkörpers die erste Trägerfolie auf dem Mehrschichtkörpers bzw. in dessen Schichtverbund verbleibt. Hierdurch wird ein selbsttragendes Sicherheitselement erzeugt, welches beispielsweise Aussparungen, insbesondere Fensteröffnungen, im Zielsubstrat verschließen bzw. überdecken kann. Weiterhin kann die zusätzliche mechanische Stabilität, die die erste Trägerfolie dem Mehrschichtkörpers bzw. einem Sicherheitselements verleiht, dazu dienen, die optische Brillanz des Sicherheitselements zu erhöhen, wenn das Sicherheitselement beispielsweise in einen Kunststoffverbund einlaminiert wird, wie das beispielsweise bei Sicherheitsdokumenten aus Polycarbonat (PC) im ID-Kartenformat oder anderen Laminaten der Fall sein kann. Diese zusätzliche mechanische Stabilität kann auch beim weiteren Verarbeiten des Zielsubstrats vorteilhaft sein, beispielsweise beim Überdrucken mit einem Stahlstich.

Das Ablösesystem besteht vorzugsweise aus einem wachsartigen Material, welches insbesondere durch die bei einem Heißprägevorgang auftretende Wärme erweicht. Die Gesamtdicke des Ablösesystems beträgt vorzugsweise zwischen 0,01 µm bis 4 µm. erweicht wird und ein sicheres Trennen der zweiten Trägerfolie ermöglicht.

Das Ablösesystem kann mehrschichtig aufgebaut sein. Es umfasst beispielsweise eine Schicht aus Wachs und eine Schicht aus einem Lack. Als Lacke können Acrylaten, Polyurethanen oder Zellulosederivaten zum Einsatz kommen. Bevorzugt weist die Lackschickt eine Dicke im Bereich von 0,1 bis 3 µm, vorzugsweise im Bereich von 0,2 bis 1,5 µm, auf.

Die Schichten des Ablösesystems auf dem Mehrschichtkörper bzw. auf dem Sicherheitselement weisen nach der Applikation auf das Zielsubstrat bevorzugt im Wesentlichen dieselbe Flächengröße wie das Sicherheitselement bzw. wie die ersten Teilbereiche auf. Dies wird insbesondere dadurch ermöglicht, dass bei der Applikation das Ablösesystem nur innerhalb des ersten Teilbereichs aktiviert wird und im benachbarten zweiten Teilbereich nicht aktiviert wird und deshalb in dem zweiten Teilbereich das Ablöseschichtsystem auf der zweiten Trägerfolie verbleibt. Durch die geringe Dicke des Ablösesystems ist eine randscharfe Abtrennung des Ablöseschichtsystems an den Außenrändern des ersten Teilbereichs möglich.

Bevorzugt verbleiben eine oder mehrere Schichten des Ablösesystems auf dem Sicherheitselement nach Applikation auf das Zielsubstrat. Dies ist bevorzugt dann der Fall, wenn das Ablösesystem zwischen der zweiten Trägerfolie und den Klebstoffschichten angeordnet ist. Hierdurch ist es möglich, mit Hilfe dieser Schichten die äußere Oberfläche des Mehrschichtkörpers bzw. Sicherheitselements mit zusätzlichen Funktionen auszurüsten. Beispiele sind eine bessere Benetzbarkeit oder Überdruckbarkeit mit weiteren funktionalen Schichten oder dazu gegenteilig eine hydrophobe Funktion oder andere Flüssigkeiten abweisende Funktionen oder auch die Erzeugung einer optischen Mattierung und/oder eines optischen Glanzes und/oder die Erzeugung besonderer taktiler Eigenschaften. Es ist auch möglich, zusätzliche Sicherheitsdrucke im sichtbaren Wellenlängenbereich, UV-Bereich, IR-Bereich zu ergänzen. Einzelne oder alle Schichten des Ablöseschichtsystems können vollflächig oder nur in partiellen Flächenbereichen vorgesehen sein.

Ferner ist möglich, dass vor Aufbringen des Ablösesystems eine oder mehrere Hilfsschichten auf die von der Dekorlage abgewandte Seite der ersten Trägerfolie der Grundfolie aufgebracht werden. Die Hilfsschichten sind dann also zwischen der ersten Trägerfolie und dem Ablösesystem angeordnet. Hierdurch ist es möglich, mit Hilfe dieser Hilfsschichten die äußere Oberfläche des Sicherheitselements bzw. des Mehrschichtkörpers mit zusätzlichen Funktionen auszurüsten. Beispiele sind bessere Benetzbarkeit oder Überdruckbarkeit mit weiteren funktionalen Schichten oder dazu gegenteilig eine hydrophobe Funktion oder andere Flüssigkeiten abweisende Funktionen oder auch die Erzeugung einer optischen Mattierung und/oder eines optischen Glanzes und/oder die Erzeugung besonderer taktiler Eigenschaften. Es ist auch möglich, zusätzliche Sicherheitsdrucke im sichtbaren Wellenlängenbereich, UV-Bereich, IR-Bereich zu ergänzen. Eine weitere Funktion kann darin bestehen, den Haftungsverbund zu weiteren Decklagen beim Einlaminieren des Zielsubstrats in ein Dokument oder einen Dokumentverbund zu erhöhen. Einzelne oder alle Schichten des Ablöseschichtsystems können vollflächig oder nur in partiellen Flächenbereichen vorgesehen sein.

Bevorzugt werden die eine oder mehrere Schichten des Ablösesystems von dem Sicherheitselement nach Applikation auf das Zielsubstrat abgelöst und die Hilfsschichten bilden die äußere, freie Oberfläche des Sicherheitselements. Verzichtet man auf die Hilfsschichten, bildet bevorzugt die Trägerfolie die äußere, freie Oberfläche des Sicherheitselements und erlaubt damit insbesondere eine besonders brillante optische Wirkung des Sicherheitselements.

Besonders vorteilhaft ist hierbei, den Folienkörper auf ein Fenster eines Sicherheitsdokuments, beispielsweise einer Banknote oder eines ID-Dokuments zu transferieren und das Fenster damit ganz oder teilweise zu verschließen bzw. zu bedecken. Hierdurch können Sicherheitselemente mit Durchsichtseigenschaften (see through), mit unterschiedlichen Bildern in Aufsicht und Durchsicht, mit unterschiedlichen Bildern bei Betrachtung von Vorderseite und Rückseite des Substrates oder mit Moirébildern Verwendung finden. Auch Kombinationen verschiedener optischer Effekte sind möglich. Unter den Oberbegriff Fenster sollen transparente oder semitransparente Bereiche eines Substrates und/oder Substrate mit einem oder mehreren Löchern oder mit einer oder mehreren Aussparungen fallen.

So ist es möglich, die Formgebung der Folienkörper in ihren Längserstreckungen geringer zu wählen, und so die Verformung des Sicherheitsdokuments durch unterschiedliche Ausdehnung des Papiers und der Folie aufgrund der geringeren versiegelten Fläche zu minimieren. Der den Bereich des Fensters überdeckende Teil des Sicherheitselements kann dabei sowohl Teile der zweiten Klebstoffschicht oder keinen Klebstoff aufweisen, mit einem Lack teil- oder ganzflächig beschichtet oder teil- oder ganzflächig bedruckt sein.

Um die Verformung des Sicherheitsdokuments durch unterschiedliche Ausdehnung des Papiers und der Folie noch weiter zu minimieren, ist es weiterhin von Vorteil, auf der dem Folienkörper gegenüberliegenden Seite des Zielsubstrats eine Versiegelungsschicht aufzubringen, die vorzugsweise eine ähnliche oder gleiche Flächenausdehnung wie der Folienkörper aufweist und weitgehend mit dem Folienkörper überlappend angeordnet ist, sodass von dem Folienkörper und der Versiegelungsschicht das Zielsubstrat auf beiden Seiten gleichermaßen bedeckt ist. Die Dicke bzw. Stärke der Versiegelungsschicht kann gleich der Dicke bzw. Stärke des Folienkörpers sein oder dazu unterschiedlich sein. Die äußere Umrissform der Folienkörper auf den gegenüberliegenden Seiten des Zielsubstrats kann dabei unterschiedlich sein. Die Versiegelungsschicht kann dabei durch einen Versiegelungs-Folienkörper oder durch eine Versiegelungs-Lackschicht gebildet sein. Die Versiegelungsschicht soll vor allem die das Fenster umgebende Bereiche des Zielsubstrats versiegeln, kann aber auch im Bereich des Fensters vorgesehen sein. Beispielsweise kann die Versiegelungsschicht entweder vor dem Einbringen des Fensters, beispielsweise durch Stanzen oder Schneiden, aufgebracht werden und beim Einbringen des Fensters mit dem Zielsubstrat gemeinsam durchtrennt und entfernt werden. Eine alternative Variante ist das Aufbringen der Versiegelungsschicht nach dem Einbringen des Fensters, sodass die Versiegelungsschicht auch die freie Rückseite des Folienkörpers im Bereich des Fensters bedeckt. Die Versiegelungsschicht kann dabei insbesondere die senkrechten Schnittkanten des Fensters ebenfalls versiegeln, um auch dort das Eindringen von Feuchtigkeit zu verhindern.

Die Versiegelungsschicht kann insbesondere denselben Aufbau aufweisen wie das Sicherheitselement. Die Versiegelungsschicht kann auf dieselbe Weise hergestellt und/oder appliziert werden wie das Sicherheitselement.

Die Versiegelungsschicht kann ebenso wie der Folienkörper Sicherheitselemente aufweisen, die sich mit Sicherheitselementen des Folienkörpers überlagern können, sodass mehrere Sicherheitselemente in Kombination insbesondere optische Effekte erzeugen können.

Weiter ist es auch möglich, durch die Gestaltung der Umrissform des transferierten Folienkörpers ein weiteres Sicherheitsmerkmal bereitzustellen. Beispielsweise kann die Umrissform filigrane und/oder kleinteilige Motive aufweisen. Die Umrissform des transferierten Folienkörpers kann dabei ähnlich der Umrissform des Fenster oder davon verschieden sein.

Gemäß einer bevorzugten Ausführungsform wird als erste Klebstoffschicht eine durch elektromagnetische Strahlung aktivierbare Klebstoffschicht, insbesondere eine Klebstoffschicht bestehend aus einem UV-aktivierbaren Klebstoff verwendet, der durch Bestrahlung mit UV-Licht aktiviert werden kann. Andere Bestrahlungsmöglichkeiten sind mittels Elektronenstrahl oder Laserstrahlung. Hierdurch wird zum einen der Vorteil erzielt, dass die Aktivierung der ersten Klebstoffschicht in dem ersten Bereich zielgenau gesteuert werden kann. Weiter hat sich gezeigt, dass bei Verwendung einer derartigen Klebstoffschicht ein Ablösen der ersten Trägerfolie von der zweiten Trägerfolie während eines nachfolgenden Transfer-Prozesses sicher verhindert werden kann und auch so das Transferergebnis weiter verbessert werden kann.

Vorzugsweise wird die erste Klebstoffschicht vollflächig sowohl im mindestens einen ersten Teilbereich als auch im zweiten Teilbereich auf die der Dekorschicht abgewandten Oberfläche der Trägerfolie aufgebracht. Die Aktivierung der ersten Klebstoffschicht im ersten Bereich erfolgt hierbei im Folgenden dann vor Abziehen des zweiten Teils der Grundfolie. Die erste Klebstoffschicht kann hierbei beispielsweise mittels eines Druckverfahrens, beispielsweise Flexodruck, Tiefdruck oder Siebdruck, aber auch mittels Aufgießen, Aufsprühen oder Aufrakeln auf die erste Trägerfolie aufgebracht werden. Ein Aufbringen des Klebstoffs ist insbesondere aus einer Lösung, beispielsweise auf Basis organischer Lösemittel oder auf wässriger Basis, als Dispersion oder als Emulsion, oder lösemittelfrei (100%-System) möglich.

Die erste Klebstoffschicht wird vorzugsweise nach Aufbringen der zweiten Trägerfolie durch Bestrahlung im ersten Bereich aktiviert, so dass die zweite Trägerfolie im ersten Bereich an der Grundfolie, das heißt an der zweiten Klebstoffschicht auf der ersten Trägerfolie der Grundfolie, haftet. Das Material der ersten Klebstoffschicht wird hierbei in Bezug auf die Grundfolie und die zweite Trägerfolie vorzugsweise so gewählt, dass die Haftung zwischen Grundfolie und zweiter Trägerfolie nach Aktivierung der ersten Klebstoffschicht auch bei Raumtemperatur (20 °C) höher als die durch die Ablöseschicht vermittelte Haftung zwischen Dekorlage und erster Trägerfolie ist. Weiter ist das Material der ersten Klebstoffschicht und zweiten Klebstoffschicht in Bezug auf die erste Trägerfolie und die zweite Trägerfolie vorzugsweise so gewählt, dass die Haftung zwischen der ersten Trägerfolie und der zweiten Trägerfolie bei nicht aktivierter erster Klebstoffschicht geringer als die durch die Ablöseschicht vermittelte Haftung zwischen erster Trägerfolie und Dekorlage sowohl bei Zimmertemperatur (20 °C) als bei Prägetemperatur (180 °C) ist.

Weiter hat es sich als vorteilhaft erwiesen, dass die Haftungseigenschaften zwischen der ersten Klebstoffschicht und/oder der zweiten Klebstoffschicht und erster und/oder zweiter Trägerfolie durch Aufbringen von Primern (beispielsweise Lacke; Chrom- und/oder SiOₓ-Bedampfungen), Haftvermittlern oder durch Corona-, Flamm-, oder Plasmabehandlung der ersten bzw. zweiten Trägerfolie angepasst werden.

Gemäß einem bevorzugten Ausführungsbeispiel wird die erste Klebstoffschicht von einer in Richtung der von der Dekorschicht abgewandten Seite der zweiten Trägerfolie beabstandet angeordneten Strahlungsquelle bestrahlt. Die Strahlungsquelle ist hierbei vorzugsweise mehr als 10 mm von der zweiten Trägerfolie beabstandet angeordnet. Als Strahlungsquelle wird vorzugsweise eine UV-Strahlungsquelle verwendet, welche die erste Klebstoffschicht mit Licht, vorzugsweise mit UV-Licht, belichtet. Als Strahlungsquelle eignen sich so beispielsweise UV-Lampen, insbesondere mit einem nachgeschalteten Kollimator oder auch ein Laser.
Durch eine derartige Belichtung der ersten Klebstoffschicht ist es möglich, die Belichtung der ersten Klebstoffschicht unabhängig von der Ausgestaltung der Dekorlage der Grundfolie zu wählen. Vorzugsweise besteht die zweite Trägerfolie hierbei aus einem Material, welches für einen bestimmten Wellenlängenbereich der für die Belichtung verwendeten Strahlungsquelle zumindest teilweise transparent ist.

Ein UV-Belichtungs-System besteht beispielsweise aus einer Strahlungsquelle, welche je nach Leistung und Typ (beispielsweise Quecksilberdampflampen mit/ohne Dotierungen oder auch UV-LEDs) einsetzbar sind sowie aus Blenden und/oder Reflektoren (zum Beispiel für einen kollimierenden oder fokussierenden Strahlengang mit oder ohne Filter für beispielsweise IR-Strahlung). UV-LEDs, das heißt Leuchtdioden, die UV-Strahlung abgeben, sind aufgrund ihrer im Vergleich zu Quecksilberdampflampen vergleichsweise geringen Wärmestrahlung und der dadurch verbundenen geringen Verlustleistung sowie der damit verbundenen geringen Wärmebelastung des Substrats und/oder der zu verarbeitenden Folien besonders vorteilhaft einsetzbar.

Eine selektive Belichtung der ersten Klebstoffschicht in den gewünschten Bereichen, beispielsweise die selektive Bestrahlung der ersten Klebstoffschicht in dem ersten Bereich zur Aktivierung der ersten Klebstoffschicht in dem ersten Bereich, kann durch eine entsprechende Ansteuerung der Strahlungsquelle oder durch Anordnung einer Belichtungsmaske in dem Strahlengang zwischen der Strahlungsquelle und der ersten Klebstoffschicht erzielt werden.

Weiter ist es auch möglich, die erste Klebstoffschicht durch Belichtung im zweiten Bereich zu deaktivieren. So ist es beispielsweise möglich, einen entsprechenden Klebstoff für die erste Klebstoffschicht zu verwenden, der beispielsweise mittels UV-Strahlung deaktivierbar ist. Weiter ist es auch möglich, einen UV-aktivierbaren Klebstoff für die erste Klebstoffschicht zu verwenden, der bei Bestrahlung mit UV-Licht aushärtet und die erste Klebstoffschicht vor Aufbringen der zweiten Trägerfolie im zweiten Bereich zu bestrahlen. Die erste Klebstoffschicht wird somit vor Aufbringung der zweiten Trägerfolie im zweiten Bereich ausgehärtet, so dass nach Aufbringen der zweiten Trägerfolie ein Anhaften der zweiten Trägerfolie im zweiten Bereich nicht mehr möglich, da die erste Klebstoffschicht in diesem Bereich bereits ausgehärtet und damit deaktiviert wurde.

Gemäß einer bevorzugten Ausführungsform wird als Strahlungsquelle ein Laser verwendet, der so gesteuert wird, dass die erste Klebstoffschicht im ersten Bereich, nicht jedoch im zweiten Bereich bestrahlt wird und/oder im zweiten Bereich, nicht jedoch im ersten Bereich bestrahlt wird. Dies kann beispielsweise durch entsprechende Ansteuerung eines die Position des Lasers oder den Ablenkwinkel des Laserstrahls bestimmenden Stellglieds erzielt werden.

Gemäß eines weiteren bevorzugten Ausführungsbeispiels wird in dem Strahlengang zwischen Strahlungsquelle und erster Klebstoffschicht eine Belichtungsmaske angeordnet, welche so ausgeformt und angeordnet ist, dass die erste Klebstoffschicht im ersten Bereich, nicht jedoch im zweiten Bereich bestrahlt wird oder die erste Klebstoffschicht im zweiten Bereich, nicht jedoch im ersten Bereich bestrahlt wird. Die Belichtungsmaske kann hierbei beispielsweise Teil eines Trommel- oder Bandbelichters sein, durch den die Folienbahn gebildet wird, aus zweiter Trägerfolie, erster Klebstoffschicht, zweiter Trägerfolie, Ablöseschicht und Dekorlage geführt wird.

Gemäß eines weiteren bevorzugten Ausführungsbeispiels wird die Dekorschicht zur Steuerung der Bestrahlung der ersten Klebstoffschicht verwendet.

Hierzu wird vorzugsweise die erste Klebstoffschicht von einer in Richtung der von der ersten Trägerfolie abgewandten Seite der Dekorschicht angeordneten und von der Dekorschicht beabstandet angeordneten Strahlungsquelle bestrahlt. Die erste Dekorschicht ist damit im Strahlengang zwischen Strahlungsquelle und erster Klebstoffschicht angeordnet. Vorzugsweise weist die Dekorschicht eine opake, im ersten oder zweiten Bereich vorgesehene und in dem zweiten bzw. dem ersten Bereich nicht vorgesehene Schicht auf, welche als Maskierungsschicht zur Steuerung der Bestrahlung der ersten Klebstoffschicht verwendet wird. So ist es beispielsweise möglich, eine metallische Reflexionsschicht der Dekorschicht zusätzlich als Maskierungsschicht zur Steuerung der Bestrahlung der ersten Klebstoffschicht zu verwenden. Hierdurch ist es möglich, die Belichtung der ersten Klebstoffschicht passergenau zum Design der Dekorschicht zu steuern.

Vorzugsweise wird in einem ersten Bestrahlungsschritt die erste Klebstoffschicht vor Aufbringen der zweiten Trägerfolie von einer in Richtung der von der ersten Trägerfolie abgewandten Seite der Dekorschicht angeordneten und von der Dekorschicht beabstandet angeordneten Strahlungsquelle durch die als Maskierungsschicht wirkende Dekorschicht bestrahlt und in dem zweiten Bereich deaktiviert. In einem zweiten Bestrahlungsschritt wird die erste Klebstoffschicht sodann nach Aufbringen der zweiten Trägerfolie von einer in Richtung der von der ersten Trägerfolie abgewandten Seite der zweiten Trägerfolie angeordneten und von der zweiten Trägerfolie beabstandet angeordneten Strahlungsquelle bestrahlt und in dem ersten Bereich aktiviert.

Dabei können UV-A- und/oder UV-B und/oder UV-C-Strahlen zur Aushärtung eingesetzt werden, je nach verwendetem Initiator-System in der Klebstoffschicht und/oder je nach Strahlungs-Durchlässigkeit der Trägerfolien und/oder anderer zu durchstrahlender Schichten. Weiterhin ist ein ausreichender Energieeintrag nötig, um eine ausreichende Aushärtung zu erzielen. Wärme (beispielsweise IR-Strahlung) unterstützt diese Aushärtung zusätzlich. Unter Aushärtung ist insbesondere eine Verkettung kurzkettiger Monomere, Oligomere und Polymere in langkettigere Polymere zu verstehen. Die Polymerketten sind grundsätzlich beweglicher, wenn ein Wärmeeintrag erfolgt und lassen sich dadurch leichter aneinander ketten.

Die Belichtung der ersten Klebstoffschicht kann - wie oben beschrieben - einstufig erfolgen. Es ist jedoch auch möglich, dass die Belichtung mehrstufig erfolgt. So ist es beispielsweise möglich, dass in einem ersten Belichtungsschritt die Klebstoffschicht zwar aktiviert wird, aber noch kein vollständiges Aushärten des Klebstoffs erfolgt. Nach Abziehen des zweiten Teils der Grundfolie wird die verbleibende Folie mit der zweiten Trägerfolie und dem ersten Teil der Grundfolie sodann nachbestrahlt, wobei die erste Klebstoffschicht vollständig aushärtet. Bei opaken Transferfolien kann insbesondere auch eine Voraktivierung des UV-Klebstoffs von der Klebstoffseite her erfolgen. Anschließend erfolgt das Zusammenführen der Lagen und das Nachhärten des voraktivierten Klebstoffs durch die Lagen hindurch.

Gemäß einer weiteren bevorzugten Ausführungsform weist die Dekorlage und/oder eine der Transferlagen Marken auf, die zur Bestimmung des ersten und zweiten Bereiches der ersten Klebstoffschicht und/oder zur Bestimmung der ersten und zweiten Teilbereiche der Grundfolie verwendet werden können. Diese Marken stellen somit Registermarken dar. Die Marken können aus einem Druckstoff und/oder aus einem Oberflächenrelief und/oder aus einem magnetischen und/oder einem elektrisch leitfähigen Stoff ausgeformt sein. Es kann sich bei den Marken so beispielsweise um optisch auslesbare Registermarken handeln, die sich durch ihren Farbwert, ihre Opazität oder ihre Reflexionseigenschaften von dem Hintergrund unterscheiden. Es kann sich bei den Marken auch um eine makroskopische oder diffraktive Reliefstruktur handeln, die das einfallende Licht in einem vorgegebenen Winkelbereich ablenkt und sich durch diese Eigenschaften von dem Hintergrundbereich optisch unterscheiden. Designelemente der Dekorlage können ebenfalls als Positionsmarken dienen. Es kann sich bei den Registermarken aber auch um mittels eines magnetischen oder eines die elektrische Leitfähigkeit erfassenden Sensors erfassbare Registermarken handeln. Möglich sind auch Stanzlöcher als Marken oder das Zusammenführen der Folien mittels vorgestanzter "Traktorspuren".

Die Marken werden erfasst, beispielsweise mittels eines optischen oder mechanischen, induktiven, kapazitiven Sensors oder Ultraschallsensors und mittels der Marken wird sodann die Durchtrennung der Trägerfolie, die Aktivierung der ersten Klebstoffschicht, die Deaktivierung der ersten Klebstoffschicht und/oder das Aufbringen der ersten Klebstoffschicht gesteuert. So weist die Dekorlage beispielsweise optisch auslesbare Registermarken auf, welche die Bestrahlung der ersten Klebstoffschicht und vorzugsweise auch das Durchtrennen der ersten Trägerschicht entlang der Grenzlinie zwischen dem mindestens einen ersten Teilbereich und dem zweiten Teilbereich steuert. Auch hierdurch ist eine registergenaue Aktivierung sowohl der ersten Klebstoffschicht als auch eine registergenaue Durchtrennung der Trägerfolie zum Design der Dekorlage möglich.

Die Marken sind vorzugsweise im zweiten Teilbereich der Grundfolie angeordnet. Die Marken müssen sich jedoch nicht immer nur im zweiten Teilbereich befinden. Alternativ kann zumindest ein Teil der Marken, meist als zusammenhängende Spur ausgeführt, auf der Trägerfolie fixiert und freigestellt werden. Diese Marken werden bei der Applikation gelesen und für das Einrücken bei der Positionierung (Insetting) benötigt. Diese Marken bilden also einen separaten Teilbereich, der nicht mit dem zweiten Teilbereich abgezogen wird und auch nicht zusammen mit dem ersten Teilbereich appliziert wird. Die Marken können hierbei beispielsweise als Linien oder Streifen ausgeformt sein, welche vorzugsweise quer und längs (zur Längs- und/oder Querregistersteuerung) zur Längsrichtung der Folienbahn verlaufen, welche die Grundfolie ausbildet. Die Marken sind hierbei vorzugsweise zwischen zwei ersten Bereichen der Grundfolie angeordnet.

Vorzugsweise sind weiter jedem ersten Teil der Grundfolie ein oder mehrere Registermarken zugeordnet.

Weiter ist es auch vorteilhaft, wenn die erste Klebstoffschicht im zweiten Bereich mittels Überdrucken mit einer Deaktivierungsschicht deaktiviert wird oder die erste Klebstoffschicht auf die erste und/oder zweite Trägerfolie im ersten Bereich, nicht jedoch im zweiten Bereich, aufgedruckt wird. Die Deaktivierungsschicht kann beispielsweise aus Silikon oder silikonhaltigen Stoffen oder aus Polytetrafluorethylen (PTFE)/ (Teflon®-) sein.

Weiter ist es auch möglich, dass die erste Klebstoffschicht im ersten Bereich und im zweiten Bereich mit unterschiedlicher Flächendichte aufgebracht wird, sodass sich die mittlere Klebekraft pro Flächeneinheit, insbesondere pro cm² im ersten und zweiten Bereich unterscheidet. Vorzugsweise wird bei dieser Ausführungsform die erste Klebstoffschicht in einem Muster wie Punkte, Symbole, alphanumerische Zeichen, Linien, Kreise, Wellen oder andere grafische Motive im ersten und/oder zweiten Flächenbereich aufgedruckt, wobei der Unterschied in der Flächendichte durch Variation der Punktgrößen und/oder der Rasterweiten zwischen den Klebepunkten erzielt werden kann. Weiter ist es auch möglich, hierzu im ersten Bereich die Klebstoffschicht vollflächig aufzubringen und im zweiten Bereich die Klebstoffschicht lediglich in Form eines punktförmigen Rasters aufzubringen oder im zweiten Bereich die erste Klebstoffschicht nicht aufzubringen und im ersten Bereich die Klebstoffschicht in einem punktförmigen Raster aufzubringen. Die mittlere Flächenbelegung der ersten und/oder zweiten Trägerfolie mit der ersten Klebstoffschicht unterscheidet sich im ersten Bereich von der im zweiten Bereich hierbei um mindestens 15%. Durch diese Verfahren ist es möglich, mittels eines Druckverfahrens, beispielsweise mittels Tief- oder Flexodruck, kostengünstig die Vorteile der Erfindung zu erzielen.

Vorzugsweise wird die zweite Trägerfolie mittels zweier gegenüberliegender Rollen auf die Grundfolie kaschiert.

Gemäß eines bevorzugten Ausführungsbeispiels wird die Dekorlage, die Ablöseschicht und die erste Trägerfolie entlang der den mindestens einen ersten Teilbereich definierenden Grenzlinie vollständig durchtrennt. Hierbei ist es auch möglich, dass auch die zweite Trägerfolie teilweise mit durchtrennt wird. Vorzugsweise ist hierbei jedoch Sorge dafür zu tragen, dass die zweite Trägerfolie weniger als zu 50 %, vorzugsweise weniger als zu 10 %, durchtrennt wird. Weist die Folie ein Ablösesystem auf, dann kann dieses auch entlang der den mindestens einen ersten Teilbereich definierenden Grenzlinie vollständig durchtrennt werden.

Die Durchtrennung der ersten Trägerfolie erfolgt vorzugsweise mittels Stanzens, beispielsweise mittels einer Rotationsstanze oder mittels eines Lasers.

Vorzugsweise erfolgt das Durchtrennen der ersten Trägerfolie im Register zu der Grenzlinie zwischen dem ersten und zweiten Bereich. Das erfindungsgemäße Verfahren erfordert andererseits keine hohe Registergenauigkeit zwischen dem die erste Klebstoffschicht strukturierenden Prozess (Belichtung, Bedrucken, Beprägen) und dem Durchtrennungs-Prozess (Stanzen), so dass kostengünstige, großindustrielle Prozesse eingesetzt werden können.

Weiter ist es vorteilhaft, dass der von der Grundfolie, der zweiten Trägerfolie und der ersten Klebstoffschicht gebildete Folienkörper mittels eines Heißprägestempels bearbeitet wird, der gleichzeitig die erste Klebstoffschicht im ersten Teilbereich aktiviert und die erste Trägerfolie entlang der dem mindestens einen ersten Teilbereich definierenden Grenzlinie mindestens teilweise durchstanzt. Hierdurch wird eine sehr hohe Registergenauigkeit zwischen diesen beiden Prozessen erzielt und im Weiteren die Anzahl der Bearbeitungsschritte reduziert.

Gemäß einem bevorzugten Ausführungsbeispiel wird nach Abziehen des zweiten Teils der Grundfolie die verbleibende Folie mit der zweiten Trägerfolie und dem ersten Teil der Grundfolie als Transferfolie, insbesondere Heißprägefolie, zur Sicherung von Sicherheitsdokumenten verwendet. Diese Transferfolie stellt ein Sicherheitselement zur Sicherung von Sicherheitsdokumenten bereit.

Weiter ist es möglich, dass diese Transferfolie eine Vielzahl von ersten Teilbereichen aufweist, die jeweils ein Sicherheitselement zur Sicherung eines Sicherheitsdokuments umfassen, das mittels Transfer auf ein Sicherheitsdokument zur Sicherung dieses Sicherheitsdokuments verwendet wird.

Hierzu wird nach Abziehen des zweiten Teils der Grundfolie die verbleibende Folie mit der zweiten Trägerfolie und dem ersten Teil der Grundfolie auf ein Zielsubstrat aufgelegt, ein oder mehrere erste Teilbereiche der Grundfolie auf das Zielsubstrat durch Aktivierung einer zwischen der Dekorlage und dem Zielsubstrat angeordneten Klebstoffschicht appliziert und der Mehrschichtkörper umfassend die erste Trägerfolie, die erste und zweite Klebstoffschicht und die zweite Trägerfolie von der Dekorlage der applizierten ein oder mehreren ersten Teilbereiche der Grundfolie abgezogen.

Ferner ist es auch möglich, dass nach Abziehen des zweiten Teils der Grundfolie die verbleibende Folie mit der zweiten Trägerfolie und dem ersten Teil der Grundfolie auf ein Zielsubstrat aufgelegt, ein oder mehrere erste Teilbereiche der Grundfolie auf das Zielsubstrat durch Aktivierung einer zwischen der Dekorlage und dem Zielsubstrat angeordneten Klebstoffschicht appliziert und die zweite Trägerfolie von der Dekorlage und der ersten Trägerfolie der applizierten ein oder mehreren ersten Teilbereiche der Grundfolie abgezogen wird. Weist die Folie ein Ablösesystem auf, dann kann das Ablösesystem entweder auf der zweiten Trägerfolie verbleiben oder zusammen mit dem applizierten ersten Teilbereich der Grundfolie appliziert werden.

Hierzu ist auf der der ersten Trägerfolie abgewandten Seite der Dekorlage bevorzugt eine dritte Klebstoffschicht aufgebracht, bei der es sich vorzugsweise um eine heißsiegelfähige Klebstoffschicht handelt. Weiter ist es auch möglich, dass es sich bei der dritten Klebstoffschicht um eine Haft-, Kalt- oder um eine latent reaktive heißsiegelfähige Klebstoffschicht handelt.

Als zweite Trägerfolie wird vorzugsweise eine transparente Kunststofffolie einer Dicke von mehr als 6 µm, vorzugsweise einer Dicke zwischen 6 µm und 250 µm verwendet. Es ist jedoch auch möglich, als zweite Trägerfolie ein Papiersubstrat oder Teslin® (matte, weiße, ungestrichene einlagige Polyethylenfolie) zu verwenden. Als erste Trägerfolie wird vorzugsweise eine Kunststofffolie einer Dicke zwischen 4 µm und 75 µm verwendet.

Gemäß eines bevorzugten Ausführungsbeispiels sind zwei oder mehr erste Teilbereiche vorgesehen und jeder der ersten Teilbereiche ist von dem als zusammenhängender Bereich ausgeformten zweiten Teilbereich umschlossen. Hierdurch wird ein Abziehen des zweiten Bereichs der Grundfolie erleichtert. Alternativ kann der zweite Teilbereich jedoch auch mehrere, nichtzusammenhängende Areale umfassen.

Vorzugsweise überdeckt der erste Bereich mindestens 50 % jedes ersten Teilbereichs, weiter bevorzugt mehr als 70 % jedes ersten Teilbereichs. Es ist weiter auch möglich, dass der erste Bereich jeden ersten Teilbereich vollständig überdeckt. Weiter überdeckt der zweite Teilbereich den ersten Bereich bevorzugt um weniger als 5 %. Durch diese Maßnahme wird weiter sichergestellt, dass das Abziehen des zweiten Teils der Grundfolie mit hoher Zuverlässigkeit erfolgen kann.

Die Dekorlage weist gemäß eines bevorzugten Ausführungsbeispiels der Erfindung ein oder mehrere einen optisch variablen Effekt generierende Schichten auf. Die Dekorlage weist so vorzugsweise eine Replizierlackschicht mit einer in die Replizierlackschicht abgeformten Oberflächenstruktur auf, beispielsweise eine diffraktive Oberflächenstruktur, eine Mikrolinsenstruktur, eine Mattstruktur oder ein symmetrisches oder asymmetrisches Blaze-Gitter. Eine Mikrolinsenstruktur kann dabei beispielsweise sphärische Linsen oder Zylinderlinsen beinhalten. Beispiele für solche Sicherheitselemente mit Mikrolinsenstruktur sind sogenannte Moiré Magnifier.

Weiter weist die Dekorlage vorzugsweise eine Reflexionsschicht auf, welche weiter bevorzugt musterförmig in Form einer ersten Information ausgeformt ist. Bei der Reflexionsschicht handelt es sich vorzugsweise um eine Metallschicht aus Chrom, Kupfer, Silber oder Gold oder einer Legierung solcher Metalle, die bevorzugt im Vakuum, insbesondere bevorzugt in einer Schichtdicke von 0,01 µm bis 0,10 µm, aufgedampft wird. Weiter ist es auch möglich, dass die Reflexionsschicht von einer transparenten Reflexionsschicht gebildet wird, beispielsweise einer dünnen oder fein strukturierten metallischen Schicht oder einer HRI- oder LRI-Schicht (HRI = High Refraction Index (Schicht mit hohem Brechungsindex); LRI = Low Refraction Index (Schicht mit niedrigem Brechungsindex)). Eine solche dielektrische Reflexionsschicht besteht beispielsweise aus einer aufgedampften Schicht aus einem Metalloxid, Metallsulfid, Titandioxid, etc.. Die Schichtdicke liegt bevorzugt zwischen 10 nm und 150 nm.

Die Dekorlage weist weiter vorzugsweise eine Volumenhologrammschicht auf, in die ein Volumenhologramm eingeschrieben ist. Volumenhologramme beruhen im Gegensatz zu Oberflächenhologrammen mit einer Oberflächenstruktur auf der Lichtbeugung an sogenannten Braggschen Ebenen innerhalb einer transparenten Schicht, durch die lokale Brechzahlunterschiede innerhalb dieser transparenten Schicht gebildet sind.

Die Dekorlage weist weiter vorzugsweise ein Dünnfilmschichtelement zur Generierung eines blickwinkelabhängigen Farbverschiebungseffekts auf. Ein solches Dünnfilmschichtelement umfasst beispielsweise eine Absorptionsschicht, eine Distanzschicht und eine Reflexionsschicht, wobei die Distanzschicht eine Schichtdicke im Bereich λ/2 oder λ/4 einer Lichtwellenlänge λ eines Lichts im sichtbaren Frequenzbereich besitzt. Weiter ist es auch möglich, dass ein solches Dünnfilmschichtelement eine Abfolge von mehreren Schichten unterschiedlichen Brechungsindex umfasst, die jeweils die λ/2- bzw. λ/4-Bedingung erfüllen.

Vorzugsweise weist die Dekorlage eine musterförmig in Form einer zweiten Information ausgeformte Farbschicht auf. Bei der Farbschicht handelt es sich vorzugsweise um eine oder mehrere einzelne Farbschichten enthaltend Pigmente und/oder Farbstoffe und/oder um eine Farbschicht enthaltend optisch variable Pigmente, beispielsweise Dünnfilmschicht-Pigmente oder Flüssigkristall-Pigmente. Möglich ist auch die Verwendung von UV- oder IR-lumineszierenden oder - phosphoreszierenden Pigmenten. Die Farbschicht oder mehrere Farbschichten kann beispielsweise mit Hilfe eines Tintenstrahldruckverfahrens und insbesondere als individualisierte Information aufgebracht sein.

Die Dekorlage kann weiter auch eine Flüssigkristallschicht aufweisen, vorzugsweise eine cholesterische Flüssigkristallschicht oder eine nematische Flüssigkristallschicht oder eine Kombination von cholesterischen und/oder nematischen Flüssigkristallschichten. Weiter kann die Dekorlage auch zwei oder mehr Farbschichten, Druckvermittlerschichten für den Tintenstrahldruck oder eine beliebige Kombination der oben angeführten Schichten aufweisen. Weitere funktionale Schichten und Kombinationen mit diesen sind ebenfalls möglich.

Weiter ist es auch möglich, dass die Dekorlage ein oder mehrere elektrisch leitfähige oder Halbleiter-Schichten umfasst, die bevorzugt eine elektrische Schaltung oder ein elektrisches Bauelement, beispielsweise einen RF-Resonanzkreis oder ein RFID-Tag und/oder Leiterbahnen und/oder Antennen und/oder elektrisch leitfähige Codierungen darstellen. Vorteilhafterweise handelt es sich um eine metallische Schicht, die aufgedampft oder aufgedruckt und anschließend bevorzugt durch galvanische Aufwachsung verstärkt wird.

Im Folgenden wird die Erfindung anhand von mehreren Ausführungsbeispielen unter Zuhilfenahme der beiliegenden Zeichnungen beispielhaft erläutert. Dabei zeigen:
- Fig. 1A: eine schematische Schnittdarstellung einer Transferfolie.
- Fig. 1B: eine schematische Schnittdarstellung der Transferfolie nach Fig. 1a im ausgestanzten Zustand.
- Fig. 2 und 3: schematische Schnittdarstellungen zur Verdeutlichung der Verfahrensschritte bei der Herstellung einer Transferfolie.
- Fig. 4: schematische Schnittdarstellungen zur Verdeutlichung der Verfahrensschritte bei der Übertragung einer Transferfolie.
- Fig. 5 und 6: schematische Schnittdarstellungen von Transferfolien mit alternativen Dekorlagen.
- Fig. 7A: eine schematische Schnittdarstellung einer weiteren Transferfolie
- Fig. 7B: eine schematische Schnittdarstellung der Transferfolie nach Fig. 7a im ausgestanzten Zustand
- Figur 8: eine schematische Schnittdarstellung zur Verdeutlichung der Herstellung einer weiteren Transferfolie
- Fig. 9: schematische Schnittdarstellungen zur Verdeutlichung der Verfahrensschritte bei der Übertragung einer weiteren Transferfolie
- Fig. 10A: eine schematische Schnittdarstellung einer weiteren Transferfolie
- Fig. 10B: eine schematische Schnittdarstellung der Transferfolie nach Fig. 10a im ausgestanzten Zustand
- Figur 11: eine schematische Schnittdarstellung zur Verdeutlichung der Herstellung einer weiteren Transferfolie
- Fig. 12: schematische Schnittdarstellungen zur Verdeutlichung der Verfahrensschritte bei der Übertragung einer weiteren Transferfolie

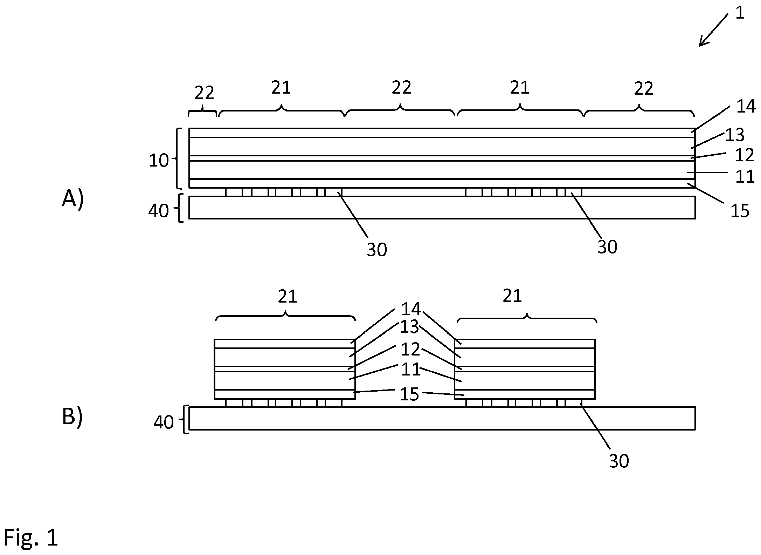

Fig. 1A zeigt eine Transferfolie 1 mit einer Grundfolie 10 und einer weiteren Trägerfolie 40. Die Grundfolie 10 umfasst eine Trägerfolie 11, eine Ablöseschicht 12 und einer Dekorlage 13, welche eine Schutzlackschicht, eine Replizierlackschicht, eine Reflexionsschicht und eine Klebstoffschicht 14 umfassen kann.

Zwischen Replizierlackschicht und der Schutzlackschlicht kann eine Verstärkungsschicht mit einer Schichtdicke von ca. 0,1 µm bis 5 µm, bevorzugt von 1 µm bis 3 µm vorgesehen sein zur zusätzlichen mechanischen Stabilisierung bei einer Lamination, beispielsweise in einem Kunststoff-Kartenaufbau.

Auch zwischen der Reflexionsschicht und der dritten Klebstoffschicht (zur Anbindung an das Substrat) kann eine Primerschicht mit einer Schichtdicke von ca. 0,01 µm bis 0,5 µm, bevorzugt von ca. 0,03 µm bis 0,1 µm und/oder eine weitere Verstärkungsschicht mit einer Schichtdicke von ca. 0,1 µm bis 10 µm, bevorzugt von ca. 0,5 µm bis 5 µm vorgesehen sein zur zusätzlichen mechanischen Stabilisierung bei einer Lamination, beispielsweise in einem Kunststoff-Kartenaufbau.

Diese vorgenannten Verstärkungsschichten können auch mehrschichtig aufgebaut sein.

Bei der Trägerfolie 11 handelt es sich vorzugsweise um eine PET-, PEN- oder BOPP-Folie einer Stärke von 6 µm bis 125 µm. Auf der Trägerfolie 11 werden nun die Ablöseschicht und die Dekorlage nacheinander durch Aufbringen weiterer Schichten aufgebaut. Hierzu wird zuerst auf die Trägerfolie 11 die Ablöseschicht 12 aufgebracht. Die Ablöseschicht 12 besteht vorzugsweise aus einem wachsartigen Material, welches insbesondere durch die bei einem Heißprägevorgang auftretende Wärme erweicht wird und ein sicheres Trennen der Dekorlage von der Trägerfolie 11 ermöglicht. Die Ablöseschicht kann mehrschichtig aufgebaut (beispielsweise aus einer Schicht Wachs und anschließend einer Schicht Trennlack) sein. Die Gesamtdicke der Ablöseschicht beträgt vorzugsweise zwischen 0,01 µm bis 1,2 µm. Anschließend wird die Schutzlackschicht in einer Schichtdicke zwischen 0,5 µm und 1,5 µm aufgebracht. Es ist hierbei auch möglich, dass die Schutzlackschicht die Funktion der Ablöseschicht 12 übernimmt und demnach sowohl die Trennung der Dekorlage 13 von der Trägerfolie 11 ermöglicht als auch die Dekorlage 13 vor mechanischer Beeinflussung und Umwelteinflüssen schützt. Es ist hierbei auch möglich, dass die Schutzlackschicht 13 eingefärbt ist oder Mikro- und Nano-Partikel enthält.

Die Replizierlackschicht besteht aus einem thermoplastischen Lack, in den mittels Hitze und Druck durch Einwirkung eines Prägewerkzeugs eine Oberflächenstruktur abgeformt ist. Weiter ist es auch möglich, dass die Replizierlackschicht von einem UV-vernetzbaren Lack gebildet wird und die Oberflächenstruktur mittels UV-Replikation in die Replizierlackschicht abgeformt wird.

Die Replizierlackschicht besitzt vorzugsweise eine Schichtdicke zwischen 0,5 µm und 15 µm. Bei der in die Replizierlackschicht abgeformten Oberflächenstruktur handelt es sich vorzugsweise um eine diffraktive Oberflächenstruktur, beispielsweise um ein Hologramm, Kinegram® oder um eine sonstige beugungsoptisch aktive Gitterstruktur. Solche Oberflächenstrukturen haben üblicherweise eine Beabstandung der Strukturelemente im Bereich von 0,1 µm bis 4 µm. Weiter ist es auch möglich, dass die Oberflächenstruktur eine makroskopische Oberflächenstruktur, beispielsweise ein Mikrolinsenfeld oder ein Blaze-Gitter ist.

Auf die Replizierlackschicht wird nach Abformen des Oberflächenreliefs die Reflexionsschicht aufgebracht. Bei der Reflexionsschicht handelt es sich vorzugsweise um eine Metallschicht aus Chrom, Kupfer, Silber oder Gold oder einer Legierung solcher Metalle, die im Vakuum in einer Schichtdicke von 0,01 µm bis 0,10 µm aufgedampft wird. Weiter ist es auch möglich, dass die Reflexionsschicht 16 von einer transparenten Reflexionsschicht gebildet wird, beispielsweise einer dünnen oder fein strukturierten metallischen Schicht oder einer HRI- oder LRI-Schicht (HRI = High Refraction Index (Schicht mit hohem Brechungsindex); LRI = Low Refraction Index (Schicht mit niedrigem Brechungsindex)). Eine solche dielektrische Reflexionsschicht besteht beispielsweise aus einer aufgedampften Schicht aus einem Metalloxid, Metallsulfid, Titandioxid, etc. einer Dicke von 10 nm bis 150 nm.

Weiter ist es auch möglich, anstelle oder zusätzlich zu den genannten Schichten in der Dekorlage 13 noch weitere Schichten einzubringen, die einen optisch variablen Effekt generieren, beispielsweise eine Volumenhologramm-Schicht, ein Dünnfilmschichtsystem, eine Schicht aus einem vernetzten cholesterischen Flüssigkristall-Material oder eine Farbschicht. Weiter ist es auch möglich, dass die Dekorlage ein oder mehrere elektrisch leitfähige oder Halbleiter-Schichten umfasst, die eine elektrische Schaltung oder ein elektrisches Bauelement, beispielsweise einen RF-Resonanzkreis oder ein RFID-Tag realisieren. Dabei kann es sich beispielsweise um eine metallische Schicht handeln, die entweder aufgedampft oder aufgedruckt und anschließend durch galvanische Aufwachsung verstärkt wird. Insbesondere kann die Reflexionsschicht 16 gleichzeitig als elektrisch leitfähige Schicht dienen, die dafür ebenfalls galvanisch nachverstärkt werden kann. Weiter kann die Dekorschicht 13 ein oder mehrere Schichten aus einem magnetischen Material oder einem elektrolumineszenten Material umfassen.

Anschließend wird die Klebstoffschicht 14, die mehrschichtig und/oder auf wässriger oder lösemittelhaltiger Basis und/oder strahlenhärtend oder Kombinationen aus diesen aufgebaut sein kann, in einer Gesamtschichtdicke von etwa 0,3 µm bis 25 µm aufgebracht. Die Klebstoffschicht 14 besteht vorzugsweise aus einem thermisch aktivierbaren Klebstoff und wird vollflächig beispielsweise mittels eines Rakels auf die Schicht 13 aufgebracht.

Auf die der Dekorlage 13 abgewandte Seite der Trägerlage 11 ist eine Klebstoffschicht 15 aufgebracht, die vorzugsweise ebenfalls aus einem thermisch aktivierbaren Klebstoff besteht und vollflächig aufgetragen wird.

Wie in Fig. 1A und Fig. 1B angedeutet, weist die Grundfolie 10 und somit auch die Dekorlage 13 zwei erste Teilbereiche 21 und einen die ersten Teilbereiche 21 umschließenden zweiten Teilbereich 22 auf. Die ersten Teilbereiche stellen hierbei den Teil der Dekorlage dar, welcher als Sicherheitselement auf ein Zielsubstrat, beispielsweise ein Sicherheitsdokument, zu transferieren ist.

Vorzugsweise ist die in die Replizierlackschicht abgeformte Reliefstruktur so gewählt, dass sie in den ersten Teilbereichen 21 eine vorgegebene optisch variable Information generiert. Die in den ersten Teilbereichen 21 abgeformte Oberflächenstruktur unterscheidet sich so vorzugsweise von der in dem Teilbereich 22 in die Replizierlackschicht abgeformten Oberflächenstruktur. Weiter ist die Reflexionsschicht bevorzugt musterförmig und partiell vorgesehen und stellt in den ersten Teilbereichen 21 eine zweite vordefinierte Information bereit. Vorzugsweise unterscheidet sich damit auch die musterförmige Ausgestaltung der Reflexionsschicht in den ersten Teilbereichen 21 von der in dem zweiten Teilbereich 22. Vorzugsweise ist in dem zweiten Teilbereich 22 die Reflexionsschicht nicht vorgesehen. Auch die optionalen weiteren optisch aktiven Schichten der Dekorlage 13 sind vorzugsweise registerhaltig zu den Teilbereichen 21 ausgeformt und stellen in den Teilbereichen 21 weitere Informationen bereit, so dass sich die Ausformung dieser Schicht ebenfalls in den ersten Teilbereichen 21 von der in dem zweiten Teilbereich 22 unterscheidet.

Weiter ist es auch möglich, dass eine Vielzahl erster Teilbereiche 21 vorgesehen ist, die von einem durchgehenden, die ersten Teilbereiche 21 umschließenden zweiten Teilbereich 22 umschlossen sind.

Auf die weitere Trägerfolie 40 ist eine erste Klebstoffschicht 30 aufgebracht. Die Klebstoffschicht 30 wird hierbei nur im Bereich der ersten Teilbereiche 21 und bevorzugt in einem Raster aufgebracht.

Bei der Klebstoffschicht 30 handelt es sich um einen UV-aktivierbaren Klebstoff. Der für die Klebstoffschicht 30 verwendbare Klebstoff hat beispielsweise folgende Zusammensetzung:

| | |
|---|---|
| Dicyclopentyloxyethyl Methacrylat | 50% bis 60% |
| 2-Hydroxyethylmethacrylat | 8% |
| Trimethylolpropantriacrylat | 40% bis 30% |
| (3-(2,3-Epoxypropoxy) propyl)trimethoxysilan | 1% |
| 1-Hydroxy-cyclohexyl-phenyl-ketone (Irgacure 184 (BASF)) | 1% bis 2% |

Eine andere beispielhafte Zusammensetzung für die Klebstoffschicht 30 verwendbare Klebstoff ist beispielsweise:

| | |
|---|---|
| Dicyclopentyloxyethyl Methacrylat | 50% bis 55% |
| 2-Hydroxyethylmethacrylat | 8% |
| Trimethylolpropantriacrylat | 35% bis 30% |
| Phenol, ethoxylated, esters with acrylic acid | 5% |
| Dipropylenglykoldiacrylat | 5% |
| (3-(2,3-Epoxypropoxy) propyl)trimethoxysilan | 1% |
| 1-Hydroxy-cyclohexylphenyl-ketone (Irgacure 184 (BASF)) | 1% bis 2% |

Die Klebstoffschicht 30 wird in einer Schichtdicke von 0,1 µm bis 10 µm mittels eines Druckverfahrens, mittels Gießens oder mittels eines Rakels auf die Trägerfolie 40 aufgebracht.

Bei der Trägerfolie 40 handelt es sich um eine transparente Kunststofffolie, die vorzugsweise aus PET-, PVC-, PEN- oder BOPP-Folie besteht und eine Schichtdicke von 6 µm bis 250 µm besitzt.

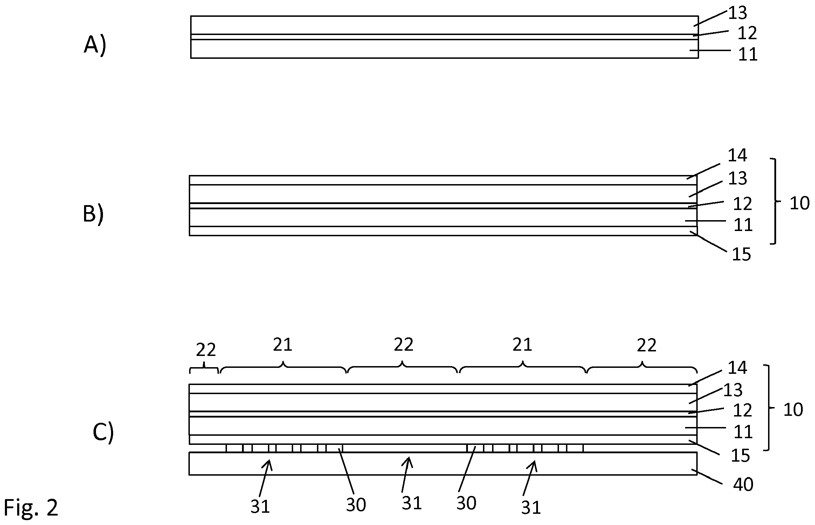

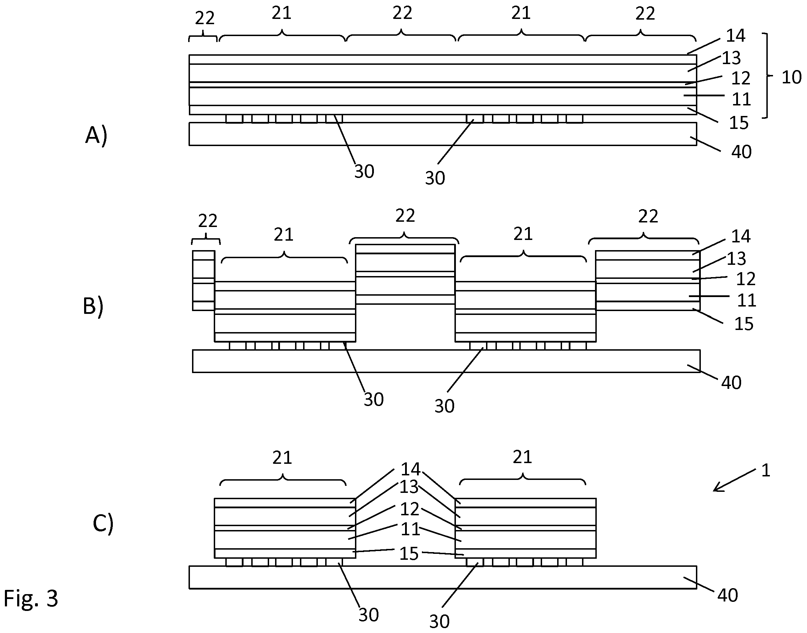

In den Figuren 2 und 3 ist die Herstellung der Transferfolie 1 schrittweise verdeutlicht. Wie Fig. 2A zeigt, wird zunächst die Grundfolie 10 ohne die Klebstoffschichten 14 und 15 bereitgestellt, die im folgenden Verfahrensschritt aufgebracht werden. Nach einer ggf. durchgeführten Trocknung der Klebstoffschichten 14 und 15 wird die Transferfolie 40 über die Klebstoffschicht 30 mit der Grundfolie verbunden. Die Klebstoffschicht 30 kann dabei auf die Transferfolie 40 oder auf die Klebstoffschicht 15 aufgebracht werden. Es ist möglich und bevorzugt, die Klebstoffschicht 30 nur im Bereich 21 aufzubringen.

Alternativ kann die Klebstoffschicht 30 auch vollflächig aufgebracht und nur im Bereich 21 aktiviert werden. Dabei ein erster Bereich der Klebstoffschicht 30 durch Belichtung aktiviert. Hierzu wird das in Fig. 2C gezeigte Foliengebilde bestehend aus der Trägerfolie 40, der Klebstoffschicht 30, der Trägerfolie 11, der Ablöseschicht 12 und der Dekorlage 13, im Bereich 31 mit UV-Licht belichtet. Hierzu wird eine kollimierte Lichtquelle verwendet, die auf der der Trägerfolie 11 abgewandten Seite der Trägerfolie 40 und von der Trägerfolie 40 beabstandet ist. In dem Strahlengang zwischen der Lichtquelle und der Klebstoffschicht 30 ist hierbei eine Belichtungsmaske angeordnet, welche den Bereich 32 verdeckt und so eine selektive Belichtung des Bereichs 31 ermöglicht. Die Belichtungsquelle und die Belichtungsmaske sind vorzugsweise Teil eines Trommelbelichters, über den der Folienkörper geführt wird. Die Belichtungsmaske ist hierbei so ausgeformt und angeordnet, dass der Bereich 31 die ersten Teilbereiche 21 weitgehend überdeckt und im Rahmen einer Registertoleranz von vorzugsweise 0,1 mm bis 2,0 mm zu den ersten Teilbereichen 21 positioniert ist.

In dem Bereich 32 wird die Klebstoffschicht 30 nicht durch UV-Licht belichtet und damit nicht aktiviert.

Als besonders erfolgreich hat sich dabei die Kombination aus einem Klebstoff der in den obigen Tabellen gezeigten Art (Auftrag mittels Flexodruck mit einer Rasterdichte zwischen 40 % und 80 % mit 40 bis 60 Linien pro cm) für die Klebstoffschicht 30 und einem heißsiegelfähigen Klebstoff, der zwischen 2 g/m² bis 4 g/m² aufgetragen wurde, für die Klebstoffschicht 15 herausgestellt. Der UV-Klebstoff ist bevorzugt rein radikalisch UV-härtend und besitzt daher einen Festkörpergehalt von 100 %. Ein Bruchteil an Monomeren kann ebenfalls bei der UV-Härtung verdampfen, weil durch die UV-Strahlung auch Wärme in die Schicht eingetragen wird, wenn der Klebstoff nicht komplett zwischen zwei benachbarten Schichten, insbesondere Folien eingeschlossen ist.

Der heißsiegelfähige Klebstoff besteht aus Acrylaten und Lösemittel (Isopropanol + Toluol). Der Festkörperanteil liegt bei 19% bis 20 % um den Auftrag an der Lackiermaschine zu gewährleisten. Er hat bei Raumtemperatur (ca. 20°C) nach dem Trocknen eine nicht klebrige Oberfläche, insbesondere bei Zimmertemperatur, da weder Schmelzpunkt noch Glasübergangstemperatur unter 30 °C und damit stets oberhalb der Verarbeitungs-(Herstellungs)-temperatur der Folie liegen.

In einem in Fig. 3 verdeutlichten weiteren Schritt wird die Dekorlage 13, die Ablöseschicht 12 und die Trägerfolie 11 entlang der die ersten Teilbereiche 21 definierenden und die ersten Teilbereiche 21 von dem Teilbereich 22 trennenden Grenzlinien durchtrennt. Die Durchtrennung dieser Schichten erfolgt vorzugsweise mittels einer Stanze, welche entsprechende Ausnehmungen in den aus den Schichten 30 sowie 15 bis 11 bestehenden Folienkörper einbringt. Es ist hierbei auch möglich, dass die Stanztiefe so gewählt wird, dass auch die Trägerfolie 40 teilweise durchtrennt wird. Weiter ist es auch möglich, dass die Trägerfolie 11 nicht vollständig, sondern lediglich teilweise durchtrennt wird. Dies kann zum einen in der Form geschehen, dass sich entlang der Grenzlinie Bereiche abwechseln, in denen die Trägerfolie 11 vollständig durchtrennt oder nicht durchtrennt ist oder dass die Trägerfolie 11 nicht in ihrer gesamten Dicke, sondern lediglich beispielsweise in 80 % ihrer Dicke durchtrennt ist.

In einem weiteren, in Fig. 3B gezeigten Schritt wird der den Teilbereich 22 umfassende Teil der Grundfolie 10 (ein "Gitter") von der Trägerfolie 40 abgezogen, wobei aufgrund der in dem Bereich 31 aktivierten Klebstoffschicht 30 die Grundfolie in den ersten Teilbereichen 21 an der Trägerfolie 40 haften bleibt und auf der Trägerfolie 40 verbleibt. Nach Abziehen des "Gitters" ergibt sich damit der in Fig. 3C gezeigte Mehrschichtkörper 1, welcher als Sicherheitselement oder als Transferfolie zum Applizieren eines Sicherheitselements auf ein Zielsubstrat Verwendung finden kann.

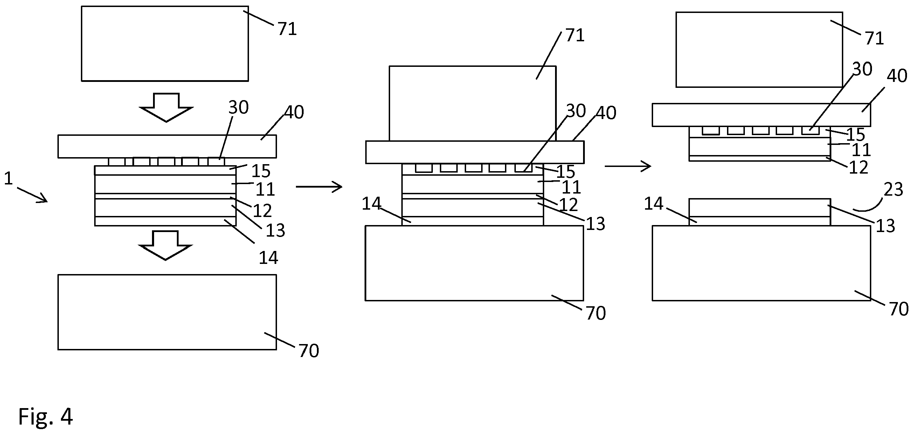

Wie anhand der Fig. 4 verdeutlicht, kann der Mehrschichtkörper 1 als Transferfolie zur Applizierung eines Sicherheitselements 23 auf ein Zielsubstrat 70 verwendet werden. Hierzu wird der Mehrschichtkörper 1 auf das Zielsubstrat 70 aufgelegt und die Klebstoffschichten 14 und 15 in einem ersten Teilbereich durch einen entsprechend geformten Heißprägestempel 71 aktiviert. Durch die Aktivierung der Klebstoffschicht 14 wird die Transferlage des Mehrschichtkörpers 1 mit dem Zielsubstrat 70 verbunden. Gleichzeitig erfolgt eine Aktivierung der Klebstoffschicht 15, durch die sich die Haftung zwischen den Trägerlagen 11 und 40 erhöht, vorzugsweise um mehr als 50 %, bevorzugt mehr als 100%, besonders bevorzugt mehr als 200%.

Das Prägen erfolgt bei einer Temperatur von 80°C bi s 300°C, bevorzugt von 100°C bis 240°C, besonders bevorzugt von 100°C bis 180°C und/oder mit einem Prägedruck von 10 N/cm² bis 10000 N/cm², bevorzugt von 100 N/cm² bis 5000 N/cm² und/oder mit einer Prägezeit von 0,01s bis 2s.

Anschließend wird der Mehrschichtkörper umfassend die Trägerfolie 40, die Klebstoffschicht 30 und die Trägerfolie 11 von dem applizierten Bereich der Dekorlage 13 abgezogen, so dass das Sicherheitselement 23 auf dem Zielsubstrat 70 verbleibt, wie dies in Fig. 4 gezeigt ist. Durch die Aktivierung der Klebstoffschicht 15 wird dabei sichergestellt, dass keine Trägerfolie am Sicherheitselement 23 verbleibt.

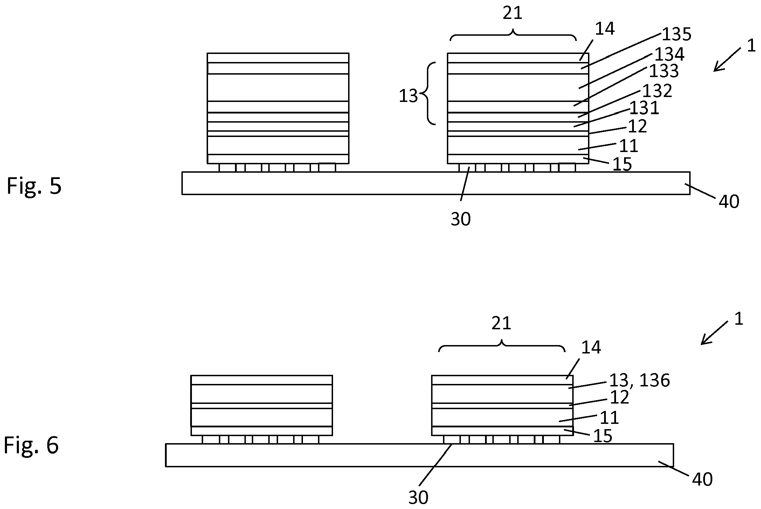

In Fig. 5 und 6 sind alternative Aufbauten der Dekorlage 13 veranschaulicht. Die weiteren Schichten sowie die Verarbeitung stimmen jedoch mit der bereits beschriebenen Ausführungsform überein.

In der Variante der Transferfolie 1 nach Fig. 5 umfasst die Dekorlage eine optionale Schutzlackschicht 131 mit einer bevorzugten Schichtdicke von 0,1 µm bis 20 µm, besonders bevorzugt von 0,5 µm bis 10 µm, eine Replizierlackschicht mit einer bevorzugten Schichtdicke von 0,1 µm bis 10 µm, besonders bevorzugt von 0,5 µm bis 5 µm mit Reflexionsschicht 132, eine Primerlackschicht 133 mit einer bevorzugten Schichtdicke von 0,1 µm bis 5 µm, besonders bevorzugt von 1 µm bis 3v, eine Volumenhologrammschicht 134 mit einer bevorzugten Schichtdicke von 5 µm bis 50 µm, besonders bevorzugt von 10 µm bis 20 µm und eine Siegellackschicht 135 mit einer bevorzugten Schichtdicke von 0,1 µm bis 5 µm, besonders bevorzugt von 5 µm bis 15 µm. In die Volumenhologrammschicht 134 ist ein Volumenhologramm eingeschrieben, welches das wesentliche Sicherheitsmerkmal des resultierenden Sicherheitselements 32 bildet.

In der Variante nach Fig. 6 besteht die Dekorlage 13 aus einer Druckvermittlerschicht 136 mit einer bevorzugten Schichtdicke von 1 µm bis 30 µm, besonders bevorzugt von 1 µm bis 3 µm, auf die ein Individualisierungsmerkmal durch Tintenstrahldruck aufgebracht werden kann. Diese Schicht 136 kann auch noch mit allen weiteren bereits beschriebenen Schichten der Dekorlage 13 kombiniert werden, um so ein individualisiertes Sicherheitselement 23 zu schaffen.

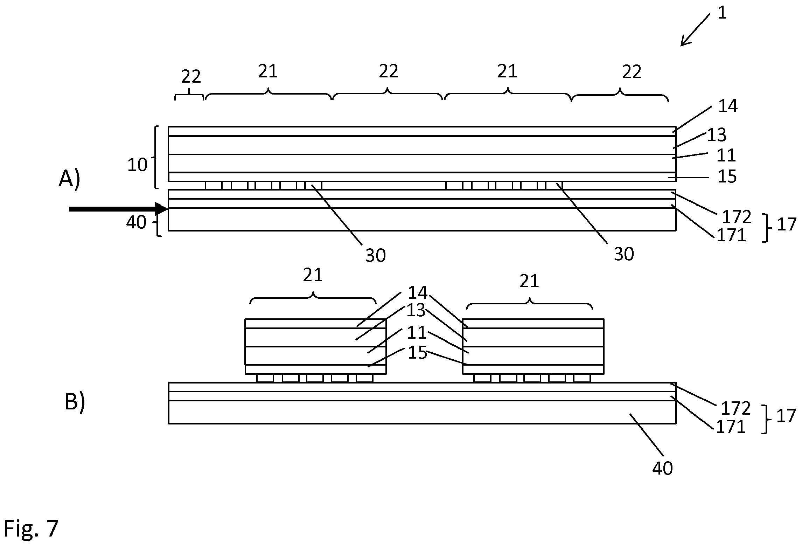

In den Figuren 7A und 7B ist eine schematische Schnittdarstellung einer weiteren Transferfolie 1 dargestellt. Wie in Figur 7A gezeigt ist, ist auf der zweiten Trägerfolie 40 ein Ablösesystem 17 vorgesehen. Durch das Ablösesystem 17 wird ermöglicht, dass bei der Applikation des Sicherheitselements 23 die erste Trägerfolie 11 auf dem Sicherheitselement 23 bzw. in dessen Schichtverbund verbleibt.

Durch das Mitapplizieren der ersten Trägerfolie 11 kann ein selbsttragendes Sicherheitselement 23 erzeugt werden, welches beispielsweise Aussparungen, insbesondere Fensteröffnungen, im Zielsubstrat 70 verschließen bzw. überdecken kann. Weiterhin kann die zusätzliche mechanische Stabilität, die die erste Trägerfolie 11 dem Sicherheitselement 23 verleiht, dazu dienen, die optische Brillanz des Sicherheitselements 23 zu erhöhen, wenn das Sicherheitselement 23 beispielsweise in einen Kunststoffverbund einlaminiert wird, wie das beispielsweise bei Sicherheitsdokumenten aus Polycarbonat (PC) im ID-Kartenformat oder anderen Laminaten der Fall sein kann. Diese zusätzliche mechanische Stabilität kann auch beim weiteren Verarbeiten des Zielsubstrats 70 vorteilhaft sein, beispielsweise beim Überdrucken mit einem Stahlstich. Der in Figur 7A gezeigte Pfeil zeigt die Position der Trennung bei Applikation der Transferfolie 1 auf ein Zielsubstrat 70. Die Grundfolie 10 ist hier bevorzugt als Laminierfolie ausgebildet.

Die Gesamtdicke des Ablösesystems 17 beträgt vorzugsweise zwischen 0,01 µm bis 4 µm. Das Ablösesystem 17 weist vorzugsweise eine Schicht aus Wachs 171 auf. Das wachsartige Material wird durch die bei einem Heißprägevorgang auftretende Wärme erweicht und ermöglicht ein sicheres Trennen der zweiten Trägerfolie 40.

Wie in den Figuren 7A und 7B gezeigt, kann das Ablösesystem 17 ferner eine Schicht aus einem Lack 172 aufweisen. Die Lacke 172 basieren bevorzugt auf Acrylaten, Polyurethanen oder Zellulosederivaten.

Die Lackschicht 172 weist bevorzugt eine Dicke im Bereich von 0,1 bis 3 µm, vorzugsweise im Bereich von 0,2 bis 1,5 µm, auf.

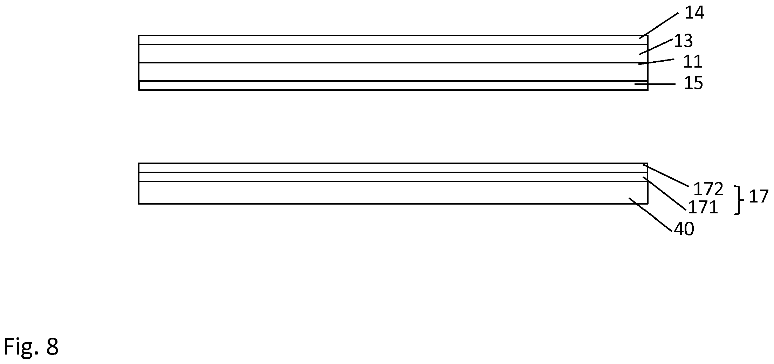

Figur 8 zeigt eine mögliche Herstellung der Transferfolie 1. Hierbei wird auf die zweite Trägerlage 40 das Ablösesystem 17, insbesondere bestehend aus einer Wachsschicht 171, die an die zweite Trägerfolie 40 angrenzt, und einer Lackschicht 172, aufgebracht. Die Grundfolie 10 weist bevorzugt die Kleberschicht 14, die Dekorlage 13 sowie die erste Trägerfolie 11 und die Kleberschicht 15 auf.

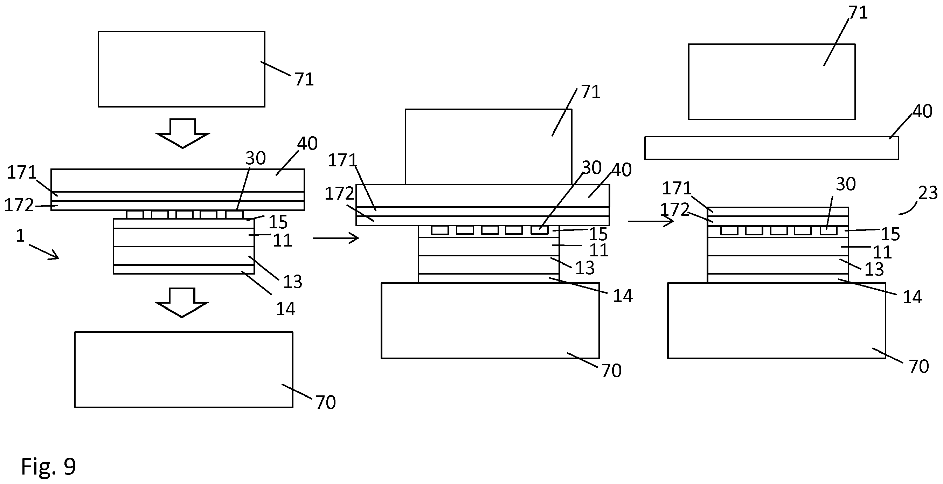

Die Figur 9 zeigt das wenigstens bereichsweise Applizieren der Transferfolie 1 auf ein Zielsubstrat 70. Hierzu wird die Transferfolie 1 auf das Zielsubstrat 70 aufgelegt und die Klebstoffschichten 14 und 15 in einem ersten Teilbereich 21 durch einen entsprechend geformten Heißprägestempel 71 aktiviert. Durch die Aktivierung der Klebstoffschicht 14 wird die Transferlage der Transferfolie 1 mit dem Zielsubstrat 70 verbunden. Gleichzeitig erfolgt eine Aktivierung der Klebstoffschicht 15, durch die sich die Haftung zwischen der ersten Trägerlage 11 und dem Ablösesystem 17 erhöht wird. Die bei der Applikation durch die Wärmeeinwirkung erweichende Wachsschicht 171 sorgt ferner für eine saubere Trennung zwischen Ablösesystem 17 und zweiter Trägerfolie 40.

Wie in Figur 9 gezeigt, verbleibt das Ablösesystem 17 zusammen mit der ersten Trägerfolie 11 und der Dekorlage 13, bevorzugt als Sicherheitselement 23, nach Applikation auf dem Zielsubstrat 70. Indem das Ablösesystem 17 die äußere Oberfläche des Sicherheitselements 23 bildet und unterschiedlichst ausgestaltet sein kann, kann hierdurch das Sicherheitselement mit zusätzlichen Funktionen ausgerüstet werden. Beispiele sind eine bessere Benetzbarkeit oder Überdruckbarkeit mit weiteren funktionalen Schichten oder dazu gegenteilig eine hydrophobe Funktion oder andere Flüssigkeiten abweisende Funktionen oder auch die Erzeugung einer optischen Mattierung und/oder eines optischen Glanzes und/oder die Erzeugung besonderer taktiler Eigenschaften. Es ist auch möglich, zusätzliche Sicherheitsdrucke im sichtbaren Wellenlängenbereich, UV-Bereich, IR-Bereich zu ergänzen. Einzelne oder alle Schichten des Ablöseschichtsystems können vollflächig oder nur in partiellen Flächenbereichen vorgesehen sein.

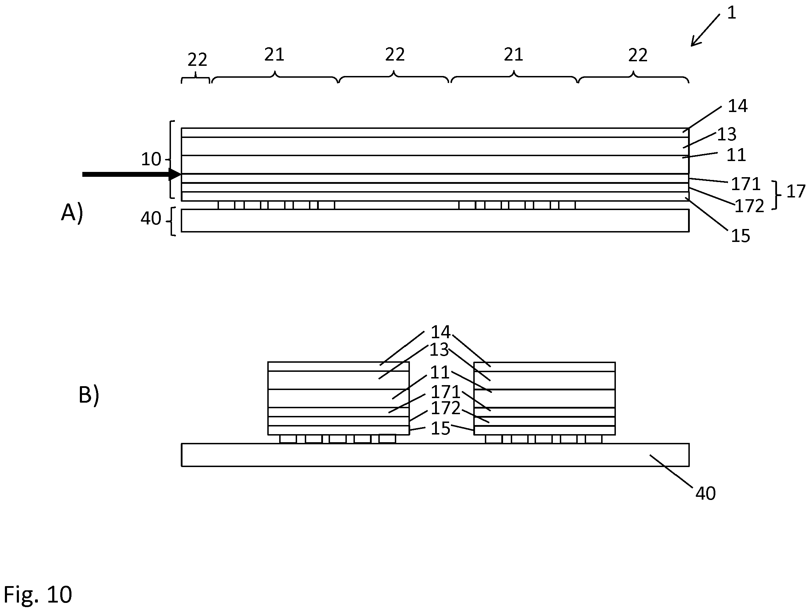

In den Figuren 10A und 10B ist eine schematische Schnittdarstellung einer weiteren Transferfolie 1 dargestellt. Wie in Figur 10A gezeigt ist, ist auf der ersten Trägerfolie 11 ein Ablösesystem 17 vorgesehen. Durch das Ablösesystem 17 wird ermöglicht, dass bei der Applikation des Sicherheitselements 23 die erste Trägerfolie 11 auf dem Sicherheitselement 23 bzw. in dessen Schichtverbund verbleibt.

Hierdurch kann ein selbsttragendes Sicherheitselement 23 erzeugt werden, welches beispielsweise Aussparungen, insbesondere Fensteröffnungen, im Zielsubstrat 70 verschließen bzw. überdecken kann. Weiterhin kann die zusätzliche mechanische Stabilität, die die erste Trägerfolie 11 dem Sicherheitselement 23 verleiht, dazu dienen, die optische Brillanz des Sicherheitselements 23 zu erhöhen, wenn das Sicherheitselement 23 beispielsweise in einen Kunststoffverbund einlaminiert wird, wie das beispielsweise bei Sicherheitsdokumenten aus Polycarbonat (PC) im ID-Kartenformat oder anderen Laminaten der Fall sein kann. Diese zusätzliche mechanische Stabilität kann auch beim weiteren Verarbeiten des Zielsubstrats 70 vorteilhaft sein, beispielsweise beim Überdrucken mit einem Stahlstich.

Der in Figur 10A gezeigte Pfeil zeigt die Position der Trennung bei Applikation der Transferfoliel auf ein Zielsubstrat 70. Die Grundfolie 10 ist hier bevorzugt als Laminierfolie ausgebildet.

Die Gesamtdicke des Ablösesystems 17 beträgt vorzugsweise zwischen 0,01 µm bis 4 µm. Das Ablösesystem 17 weist vorzugsweise eine Schicht aus Wachs 171 auf. Das wachsartige Material wird durch die bei einem Heißprägevorgang auftretende Wärme erweicht und ermöglicht ein sicheres Trennen der zweiten Trägerfolie 40.

Wie in den Figuren 10A und 10B gezeigt, kann das Ablösesystem 17 ferner eine Schicht aus einem Lack 172 aufweisen. Der Lack 172 basiert bevorzugt auf Acrylaten, Polyurethanen oder Zellulosederivaten.

Die Lackschicht 172 weist bevorzugt eine Dicke im Bereich von 0,1 bis 3 µm, vorzugsweise im Bereich von 0,2 bis 1,5 µm, auf.

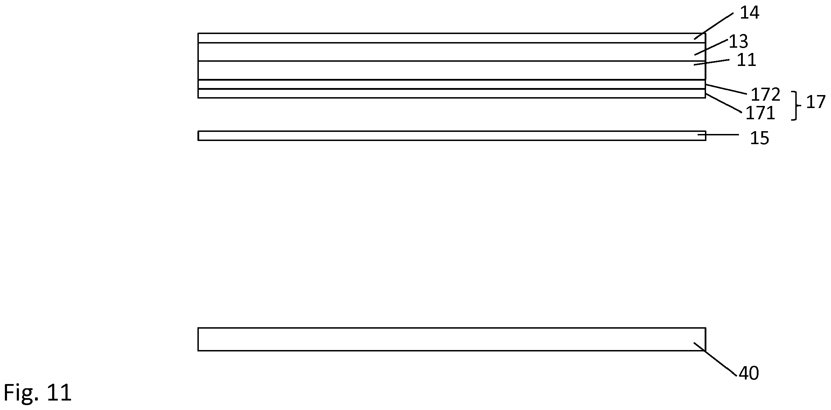

Figur 11 zeigt eine mögliche Herstellung der Transferfolie 1. Hierbei wird auf der von der Dekorlage 13 abgewandten Seite der ersten Trägerfolie 11 der Grundfolie 10 das Ablösesystem 17 aufgebracht. Das Ablösesystem 17 kann eine Wachsschicht 171 und eine Lackschicht 172 aufweisen. Ferner wird dann bevorzugt auf der äußeren, freien Seite des Ablösesystems 17 die Klebstoffschicht 15 aufgebracht. Die Klebstoffschicht 15 steht in der weiteren Verarbeitung bevorzugt in Kontakt mit der Klebstoffschicht 30. Auch mit dieser Ausführungsvariante kann ermöglicht werden, dass bei der Applikation des Sicherheitselements 23 die Grundfolie 10 auf dem Sicherheitselement 23 bzw. in dessen Schichtverbund verbleibt. Dadurch kann ein selbsttragendes Sicherheitselement 23 erzeugt werden, welches beispielsweise Aussparungen, insbesondere Fensteröffnungen, im Zielsubstrat verschließen bzw. überdecken kann.

Denkbar ist auch, dass vor Aufbringen des Ablösesystems 17 eine oder mehrere Hilfsschichten (nicht dargestellt) auf die von der Dekorlage 13 abgewandten Seite der ersten Trägerfolie 11 der Grundfolie 10 aufgebracht werden, die dann also zwischen der ersten Trägerfolie 11 und dem Ablösesystem 17 angeordnet sind. Hierdurch ist es möglich, mit Hilfe dieser Hilfsschichten die äußere Oberfläche des Sicherheitselements 23 mit zusätzlichen Funktionen auszurüsten. Beispiele sind bessere Benetzbarkeit oder Überdruckbarkeit mit weiteren funktionalen Schichten oder dazu gegenteilig eine hydrophobe Funktion oder andere Flüssigkeiten abweisende Funktionen oder auch die Erzeugung einer optischen Mattierung und/oder eines optischen Glanzes und/oder die Erzeugung besonderer taktiler Eigenschaften. Es ist auch möglich, zusätzliche Sicherheitsdrucke im sichtbaren Wellenlängenbereich, UV-Bereich, IR-Bereich zu ergänzen. Eine weitere Funktion kann darin bestehen, den Haftungsverbund zu weiteren Decklagen beim Einlaminieren des Zielsubstrats 70 in ein Dokument oder einen Dokumentverbund zu erhöhen. Einzelne oder alle Schichten des Ablöseschichtsystems können vollflächig oder nur in partiellen Flächenbereichen vorgesehen sein.

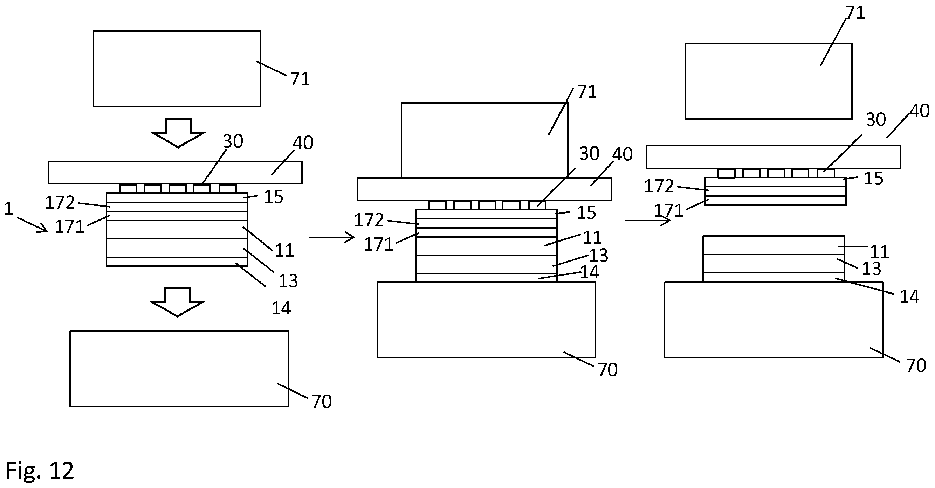

Die Figur 12 zeigt das wenigstens bereichsweise Applizieren der Transferfolie 1 auf ein Zielsubstrat 70. Hierzu wird die Transferfolie 1 auf das Zielsubstrat 70 aufgelegt. Durch die Aktivierung der Klebstoffschicht 14 wird die Transferlage der Transferfolie 1 mit dem Zielsubstrat 70 verbunden. Die Wachsschicht bei der Applikation durch die Wärmeeinwirkung erweichende 171 sorgt für eine saubere Trennung zwischen Ablösesystem 17 und erster Trägerfolie 11.

Wie in Figur 12 gezeigt, wird das Ablösesystem 17 von dem Sicherheitselement 23 nach Applikation auf das Zielsubstrat 70 abgelöst. Sind zwischen dem Ablösesystem 17 und der ersten Trägerfolie 11 Hilfsschichten angeordnet, so bilden die Hilfsschichten die äußere, freie Oberfläche des Sicherheitselements 23. Verzichtet man auf diese Hilfsschichten, bildet die Trägerfolie 11 die äußere, freie Oberfläche des Sicherheitselements 23 und erlaubt damit eine besonders brillante optische Wirkung des Sicherheitselements 23.

### Bezugszeichenliste

- 1: Transferfolie
- 10: Grundfolie
- 11: Trägerfolie (der Grundfolie)
- 12: Ablöseschicht (der Grundfolie)
- 13: Dekorlage (der Grundfolie)
- 131: Schutzlackschicht (der Grundfolie)
- 132: Replizierlackschicht (der Grundfolie)
- 133: Primerlackschicht (der Grundfolie)
- 134: Volumenhologrammschicht (der Grundfolie)
- 135: Siegellackschicht (der Grundfolie)
- 136: Druckvermittlerschicht (der Grundfolie)
- 14: Klebstoffschicht (der Grundfolie)
- 15: Klebstoffschicht (der Grundfolie)
- 16: Reflexionsschicht (der Grundfolie)
- 17: Ablösesystem
- 171: Wachsschicht
- 172: Lackschicht
- 21: erster Teilbereich
- 22: zweiter Teilbereich
- 23: Sicherheitselement
- 30: Klebstoffschicht
- 31: Bereich
- 32: Bereich
- 40: zweite Trägerfolie
- 70: Zielsubstrat
- 71: Heißprägestempel

## Patentansprüche

1. Verfahren zur Herstellung eines Sicherheitselements (1), wobei bei dem Verfahren eine Grundfolie (10) bereit gestellt wird, die eine erste Trägerfolie (11) und eine ein- oder mehrschichtige Dekorlage (13) aufweist,
- wobei auf eine zweite Trägerfolie (40) eine erste Klebstoffschicht (30) aufgebracht wird und auf die von der Dekorlage (13) abgewandte Oberfläche der ersten Trägerfolie (11) eine zweite Klebstoffschicht (15) aufgebracht wird, oder wobei die zweite Klebstoffschicht (15) auf die von der Dekorlage (13) abgewandte Oberfläche der ersten Trägerfolie (11) aufgebracht wird und die erste Klebstoffschicht (30) auf die zweite Klebstoffschicht (15) aufgebracht wird,
- und wobei die zweite Trägerfolie (40) auf die erste Trägerfolie (11) aufgebracht wird derart, dass die erste Klebstoffschicht (30) und die zweite Klebstoffschicht (15) zwischen der ersten Trägerfolie (11) und der zweiten Trägerfolie (40) angeordnet sind,
- und wobei die erste Klebstoffschicht (30) in einem ersten Bereich (31), der mindestens einen ersten Teilbereich (21) der Grundfolie (10) zumindest teilweise überdeckt, aktiviert wird und in einem an diesen Bereich (31) angrenzenden zweiten Bereich (32) die erste Klebstoffschicht (30) jedoch nicht aktiviert, nicht vorgesehen, lediglich teilweise vorgesehen oder deaktiviert wird,
- wobei die erste Trägerfolie (11) entlang der den mindestens einen ersten Teilbereich (21) definierenden und den mindestens einen ersten Teilbereich (21) von einem zweiten Teilbereich (22) der Grundfolie (10) trennenden Grenzlinie mindestens teilweise durchtrennt wird, und
- wobei ein den zweiten Teilbereich (22) umfassender zweiter Teil der Grundfolie (10) von der zweiten Trägerfolie (40) abgezogen wird, wobei in dem mindestens einen ersten Teilbereich (21) die Grundfolie (10) aufgrund der aktivierten ersten Klebstoffschicht an der zweiten Trägerfolie (40) haftet und ein den mindestens einen ersten Teilbereich (21) umfassender erster Teil der Grundfolie (10) auf der zweiten Trägerfolie (40) verbleibt.

2. Verfahren nach Anspruch 1,
**dadurch gekennzeichnet ,**
**dass** für die erste (30) und zweite Klebstoffschicht (15) unterschiedliche, insbesondere unterschiedlich aktivierbare Klebstoffe verwendet werden; und/oder
**dass** die zweite Klebstoffschicht (15) beim Heißprägen des ersten Teils der Grundfolie (10) auf ein Substrat aktiviert wird, insbesondere dass das Heißprägen bei einer Temperatur von 80°C bis 300°C, bevorzugt von 100°C bis 240°C, besonders bevorzugt von 100°C bis 180°C und/oder mit einem Prägedruck von 10 N/cm² bis 10000 N/cm², bevorzugt von 100 N/cm² bis 5000 N/cm² und/oder mit einer Prägezeit von 0,01 s bis 2 s, bevorzugt von 0,01s bis 1s erfolgt.

3. Verfahren nach einem der Ansprüche 1 oder 2,
**dadurch gekennzeichnet ,**
**dass** die zweite Klebstoffschicht (15) vor dem Aufbringen der zweiten Trägerfolie (40) auf die Grundfolie (10) getrocknet wird, und/oder dass die zweite Klebstoffschicht (15) aus einem thermoplastischen Klebstoff mit einer Glasübergangstemperatur von 50°C bis 150°C, bevorzugt von 100°C bis 120°C gebildet wird, und/oder
**dass** die zweite Klebstoffschicht (15) mit einem Flächengewicht von 0,1 g/m² bis 10 g/m², bevorzugt von 2 g/m² bis 5 g/m² aufgetragen wird.

4. Verfahren nach einem der vorhergehenden Ansprüche,
**dadurch gekennzeichnet ,**
**dass** die Grundfolie (10) eine zwischen der ersten Trägerfolie (11) und der Dekorlage (13) angeordnete Ablöseschicht (12) aufweist, die die Trennung der Dekorlage (13) von der ersten Trägerfolie (11) ermöglicht.

5. Verfahren nach einem der Ansprüche 1 bis 3,
**dadurch gekennzeichnet ,**
**dass** die Grundfolie (10) ein zwischen der ersten Trägerfolie (11) und der zweiten Trägerfolie (40) angeordnetes Ablösesystem (17) aufweist, das die Trennung der Grundfolie (10) von der zweiten Trägerfolie (40) ermöglicht.

6. Verfahren nach Anspruch 5,
**dadurch gekennzeichnet ,**
**dass** das Ablösesystem (17) entweder auf der ersten Trägerfolie (11) oder auf der zweiten Trägerfolie (40) aufgebracht wird,
wobei bevorzugt entweder das Ablösesystem (17) auf der ersten Trägerfolie (11) und die erste Klebstoffschicht (30) unmittelbar auf die zweite Trägerfolie (40) aufgebracht wird, oder die erste Klebstoffschicht (30) derart mittelbar auf die zweite Trägerfolie (40) aufgebracht wird, dass das Ablösesystem (17) unmittelbar auf der zweiten Trägerfolie (40) aufgebracht wird.

7. Verfahren nach Anspruch 5 oder 6,
**dadurch gekennzeichnet ,**
**dass** das Ablösesystem (17) eine Dicke zwischen 0,01 µm und 4 µm, bevorzugt zwischen 0,1 µm und 3 µm, aufweist, und/oder
**dass** das Ablösesystem (17) ein wachsartiges Material aufweist, und/oder dass das Ablösesystem (17) mehrschichtig ausgebildet ist, wobei das Ablösesystem (17) bevorzugt eine Schicht (171) aus Wachs und eine Schicht aus einem Lack (172) umfasst, insbesondere
**dass** als Lack (172) Acrylate, Polyurethane oder Zellulosederivate zum Einsatz kommen und/oder
**dass** als die Schicht (172) aus Lack eine Dicke zwischen 0,1 µm und 3 µm, bevorzugt zwischen 0,2 µm und 1,5 µm aufweist.

8. Verfahren nach einem der vorhergehenden Ansprüche,
**dadurch gekennzeichnet ,**
**dass** die erste Klebstoffschicht (30) in einem Raster, insbesondere einem Raster mit einer Rasterdichte von 40 bis 80 Linien pro cm aufgebracht wird, und/oder
**dass** als erste Klebstoffschicht (30) eine durch elektromagnetische Strahlung, insbesondere durch Bestrahlung mit UV-Licht aktivierbare Klebstoffschicht verwendet wird.

9. Verfahren nach einem der vorhergehenden Ansprüche,
**dadurch gekennzeichnet,**
**dass** die Dekorlage (13) und/oder die zweite Trägerfolie (40) Marken enthält und die Marken zur Bestimmung des ersten und zweiten Bereichs der ersten Klebstoffschicht (30) und/oder zur Bestimmung des ersten und zweiten Teilbereichs der Grundfolie (10) verwendet werden.

10. Verfahren nach einem der vorhergehenden Ansprüche,
**dadurch gekennzeichnet ,**
**dass** nach Abziehen des zweiten Teils der Grundfolie (10) die verbleibende Folie mit der zweiten Trägerfolie (40) und dem ersten Teil der Grundfolie (10) auf ein Zielsubstrat (70) aufgelegt wird, ein oder mehrere erste Teilbereiche (21) der Grundfolie auf das Zielsubstrat (70) durch Aktivierung einer zwischen der Dekorlage (13) und dem Zielsubstrat (70) angeordneten Klebstoffschicht (17) appliziert werden und die zweite Trägerfolie (40) von der Dekorlage (13) und der ersten Trägerfolie (11) der applizierten ein oder mehreren ersten Teilbereiche der Grundfolie (10) abgezogen wird.

11. Verfahren nach einem der vorhergehenden Ansprüche,
**dadurch gekennzeichnet ,**
**dass** auf der der ersten Trägerfolie (11) abgewandten Seite der Dekorlage (13) eine dritte Klebstoffschicht (14) aufgebracht wird.

12. Verfahren nach Anspruch 11,
**dadurch gekennzeichnet ,**
**dass** die dritte Klebstoffschicht (14) eine heißsiegelfähige Klebstoffschicht ist, und/oder
**dass** die dritte Klebstoffschicht (14) eine Kaltklebstoffschicht oder Haftklebstoffschicht ist, und/oder
**dass** die dritte Klebstoffschicht (14) eine latent reaktive heißsiegelfähige Klebstoffschicht ist.

13. Transferfolie (1), insbesondere Heißprägefolie, zum Transfer eines oder mehrerer Mehrschichtkörper (23) auf ein Zielsubstrat (70), wobei die Transferfolie (1) eine Grundfolie (10) aufweist, welche eine erste Trägerfolie (11) und eine ein- oder mehrschichtige Dekorlage (13) aufweist, wobei
- die Transferfolie (1) weiter eine zweite Trägerfolie (40) mit einer ersten Klebstoffschicht (30) und eine auf die von der Dekorlage abgewandte Oberfläche der ersten Trägerfolie (11) aufgebrachte zweite Klebstoffschicht (15) aufweist, wobei die erste Klebstoffschicht (30) und die zweite Klebstoffschicht (15) zwischen der ersten Trägerfolie (11) und der zweiten Trägerfolie (40) angeordnet sind, und wobei
- die erste Klebstoffschicht (30) in einem mindestens einen ersten Teilbereich (21) der Grundfolie zumindest teilweise überdeckenden ersten Bereich (31) aktiviert ist, so dass die Grundfolie (10) in dem mindestens einen ersten Teilbereich (21) an der zweiten Trägerfolie (40) haftet, und in einem an dem mindestens einen ersten Teilbereich (21) angrenzenden zweiten Teilbereich (22) jedoch nicht aktiviert, nicht vorgesehen, lediglich teilweise vorgesehen oder deaktiviert ist, und wobei
- die erste Trägerfolie (11) entlang der den mindestens einen ersten Teilbereich (21) definierenden und den mindestens einen ersten Teilbereich (21) von einem zweiten Teilbereich (22) der Grundfolie (10) trennenden Grenzlinie durchtrennt und ein den zweiten Teilbereich (22) umfassender Teil der Grundfolie (10) von der zweiten Trägerfolie (40) abgezogen ist.

14. Transferfolie nach Anspruch 13,
**dadurch gekennzeichnet ,**
**dass** die Grundfolie (10) eine zwischen der ersten Trägerfolie (11) und der Dekorlage (13) angeordnete Ablöseschicht (12) umfasst, die die Trennung der Dekorlage (13) von der ersten Trägerfolie (11) ermöglicht.

15. Transferfolie (1) nach Anspruch 13,
**dadurch gekennzeichnet**
**dass** die Grundfolie (10) ein zwischen der ersten Trägerfolie (11) und der zweiten Trägerfolie (40) angeordnetes Ablösesystem (17) aufweist, das die Trennung der Grundfolie (10) von der zweiten Trägerfolie (40) ermöglicht.

16. Transferfolie (1) nach Anspruch 15,
**dadurch gekennzeichnet ,**
**dass** das Ablösesystem (17) entweder auf der ersten Trägerfolie (11) oder auf der zweiten Trägerfolie (40) aufgebracht ist,
wobei bevorzugt entweder das Ablösesystem (17) auf der ersten Trägerfolie (11) und die erste Klebstoffschicht (30) unmittelbar auf die zweite Trägerfolie (40) aufgebracht ist, oder die erste Klebstoffschicht (30) derart mittelbar auf die zweite Trägerfolie (40) aufgebracht ist, dass das Ablösesystem (17) unmittelbar auf der zweiten Trägerfolie (40) aufgebracht ist.

17. Transferfolie (1) nach Anspruch 15 oder 16,
**dadurch gekennzeichnet ,**
**dass** das Ablösesystem (17) eine Dicke zwischen 0,01 µm und 4 µm, bevorzugt zwischen 0,1 µm und 3 µm, aufweist, und/oder
**dass** das Ablösesystem (17) ein wachsartiges Material aufweist, und/oder dass das Ablösesystem (17) mehrschichtig ausgebildet ist, wobei das Ablösesystem (17) bevorzugt eine Schicht (171) aus Wachs und eine Schicht aus einem Lack (172) umfasst.

18. Transferfolie (1) nach Anspruch 13 bis 17,
**dadurch gekennzeichnet,**
**dass** die Transferfolie (1) eine dritte Klebstoffschicht (14) aufweist, die auf der von der ersten Trägerfolie abgewandten Oberfläche der Dekorlage (13) aufgebracht ist und dass die durch die aktivierte zweite Klebstoffschicht (30) zwischen der ersten Trägerfolie (11) und der zweiten Trägerfolie (40) bewirkte Klebekraft geringer als die zwischen der Dekorlage (13) und dem Zielsubstrat durch die aktivierte dritte Klebstoffschicht (14) bewirkte Klebekraft ist.

19. Transferfolie (1) nach einem der Ansprüche 13 bis 18,
**dadurch gekennzeichnet ,**
**dass** die Grundfolie (10) eine Transferfolie, insbesondere eine Heißprägefolie, ist, oder
**dass** die die Grundfolie (10) eine Laminierfolie ist.

## Claims

1. Method for producing a security element (1), wherein, in the method, a base film (10) is provided, which has a first carrier film (11) and a single or multi-layered decorative ply (13),
- wherein a first adhesive layer (30) is applied to a second carrier film (40), and a second adhesive layer (15) is applied to the surface of the first carrier film (11), said surface facing away from the decorative ply (13), or wherein the second adhesive layer (15) is applied to the surface of the first carrier film (11), said surface facing away from the decorative ply (13), and the first adhesive layer (30) is applied to the second adhesive layer (15),
- and wherein the second carrier film (40) is applied to the first carrier film (11) in such a way that the first adhesive layer (30) and the second adhesive layer (15) are arranged between the first carrier film (11) and the second carrier film (40),
- and wherein the first adhesive layer (30) is activated in a first region (31), which at least partially covers at least one first partial region (21) of the base film (10), and yet the first adhesive layer (30) is not activated, not provided, only partially provided or deactivated in a second region (32) adjacent to this region (31),
- wherein the first carrier film (11) is at least partially separated along the boundary line defining the at least one first partial region (21) and separating the at least one first partial region (21) from a second partial region (22) of the base film (10), and
- wherein a second part of the base film (10) comprising the second partial region (22) is removed from the second carrier film (40), wherein, in the at least one first partial region (21), the base film (10) adheres to the second carrier film (40) because of the activated first adhesive layer, and a first part of the base film (10) comprising the at least one first partial region (21) remains on the second carrier film (40).

2. Method according to claim 1,
**characterised in that**
different adhesives, in particular adhesives that can be activated differently, are used for the first (30) and second adhesive layer (15);
and/or
the second adhesive layer (15) is activated by hot stamping the first part of the base film (10) onto a substrate, in particular
the hot stamping takes place at a temperature of from 80°C to 300°C, preferably from 100°C to 240°C, particularly preferably from 100°C to 180°C and/or with a stamping pressure of from 10 N/cm² to 10000 N/cm², preferably from 100 N/cm² to 5000 N/cm² and/or with a stamping time of from 0.01s to 2s, preferably from 0.01s to Is.

3. Method according to one of claims 1 or 2,
**characterised in that**
the second adhesive layer (15) is dried before the application of the second carrier film (40) to the base film (10), and/or
the second adhesive layer (15) is formed from a thermoplastic adhesive having a glass transition temperature of from 50°C to 150°C, preferably from 100°C to 120°C, and/or
the second adhesive layer (15) is applied with a basis weight of from 0.1 g/m² to 10 g/m², preferably from 2 g/m² to 5 g/m².

4. Method according to one of the preceding claims,
**characterised in that**
the base film (10) has a detachment layer (12) arranged between the first carrier film (11) and the decorative ply (13), said detachment layer facilitating the separation of the decorative ply (13) from the first carrier film (11).

5. Method according to one of claims 1 to 3,
**characterised in that**
the base film (10) has a detachment system (17) arranged between the first carrier film (11) and the second carrier film (40), said detachment system facilitating the separation of the base film (10) from the carrier film (40).

6. Method according to claim 5,
**characterised in that**
the detachment system (17) is applied either to the first carrier film (11) or to the second carrier film (40),
wherein preferably either the detachment system (17) is applied to the first carrier film (11) and the first adhesive layer (30) directly to the second carrier film (40), or the first adhesive layer (30) is applied indirectly to the second carrier film (40) in such a way that the detachment system (17) is applied directly to the second carrier film (40).

7. Method according to claim 5 or 6,
**characterised in that**
the detachment system (17) has a thickness of between 0.01µm and 4µm, preferably between 0.1µm and 3µm, and/or
the detachment system (17) has a waxy material, and/or
the detachment system (17) is formed to have several layers, wherein the detachment system (17) preferably comprises a layer (171) made of wax and a layer made of a lacquer (172), in particular
acrylates, polyurethanes or cellulose derivatives are used as the lacquer (172) and/or, as the layer (172) made of lacquer, has a thickness of between 0.1µm and 3µm, preferably between 0.2µm and 1.5µm.

8. Method according to one of the preceding claims,
**characterised in that**
the first adhesive layer (30) is applied in a grid, in particular a grid having a grid density of 40 to 80 lines per cm, and/or,
as the first adhesive layer (30), an adhesive layer that can be activated by electromagnetic radiation, in particular by irradiation with UV light, is used.

9. Method according to one of the preceding claims,
**characterised in that**
the decorative ply (13) and/or the second carrier layer (40) contains marks, and the marks are used for determining the first and second region of the first adhesive layer (30) and/or for determining the first and second partial region of the base film (10).

10. Method according to one of the preceding claims,
**characterised in that**,
after removing the second part of the base film (10), the remaining film with the second carrier film (40) and the first part of the base film (10) is placed onto a target substrate (70), one more first partial regions (21) of the base film are applied to the target substrate (70) by activating an adhesive layer (17) arranged between the decorative ply (13) and the target substrate (70), and the second carrier film (40) is removed from the decorative ply (13) and the first carrier film (11) of the one or more applied first partial regions of the base film (10).

11. Method according to one of the preceding claims,
**characterised in that**
a third adhesive layer (14) is applied to the side of the decorative ply (13), said side facing away from the first carrier film (11).

12. Method according to claim 11,
**characterised in that**
the third adhesive layer (14) is an adhesive layer capable of hot sealing, and/or
the third adhesive layer (14) is a cold adhesive layer or hot adhesive layer, and/or
the third adhesive layer (14) is a latently reactive adhesive layer capable of hot sealing.

13. Transfer film (1), in particular hot stamping film, for transferring one or more multilayer bodies (23) onto a target substrate (70), wherein the transfer film (1) has a base film (10), which has a first carrier film (11) and a single or multi-layered decorative ply (13), wherein
- the transfer film (1) furthermore has a second carrier film (40) having a first adhesive layer (30) and a second adhesive layer (15) applied to the surface of the first carrier film (11), said surface facing away from the decorative ply, wherein the first adhesive layer (30) and the second adhesive layer (15) are arranged between the first carrier film (11) and the second carrier film (40), and wherein
- the first adhesive layer (30) is activated in a first region (31) at least partially covering at least one first partial region (21) of the base film, such that the base film (10) adheres to the second carrier film (40) in the at least one first partial region (21), and yet is not activated, not provided, only partially provided or deactivated in a second partial region (22) adjacent to the at least one first partial region (21), and wherein
- the first carrier film (11) separates along the boundary line defining the at least one first partial region (21) and separating the at least one first partial region (21) from a second partial region (22) of the base film (10), and a part of the base film (10) comprising the second partial region (22) is removed from the second carrier film (40).

14. Transfer film according to claim 13,
**characterised in that**
the base film (10) comprises a detachment layer (12) arranged between the first carrier film (11) and the decorative ply (13), said detachment layer facilitating the separation of the decorative ply (13) from the first carrier film (11).

15. Transfer film (1) according to claim 13,
**characterised in that**
the base film (10) has a detachment system (17) arranged between the first carrier film (11) and the second carrier film (40), said detachment system facilitating the separation of the base film (10) from the second carrier film (40).

16. Transfer film (1) according to claim 15,
**characterised in that**
the detachment system (17) is applied either to the first carrier film (11) or to the second carrier film (40),
wherein preferably either the detachment system (17) is applied to the first carrier film (11) and the first adhesive layer (30) directly to the second carrier film (40), or the first adhesive layer (30) is applied indirectly to the second carrier film (40) in such a way that the detachment system (17) is applied directly to the second carrier film (40).

17. Transfer film (1) according to claim 15 or 16,
**characterised in that**
the detachment system (17) has a thickness of between 0.01µm and 4µm, preferably between 0.1 µm and 3µm, and/or
the detachment system (17) has a waxy material, and/or
the detachment system (17) is formed to have several layers, wherein the detachment system (17) preferably comprises a layer (171) made of wax and a layer made of a lacquer (172).

18. Transfer film (1) according to claim 13 to 17,
**characterised in that**
the transfer film (1) has a third adhesive layer (14), which is applied to the surface of the decorative ply (13), said surface facing away from the first carrier film, and the adhesive force between the first carrier film (11) and the second carrier film (40) caused by the activated second adhesive layer (30) is smaller than the adhesive force between the decorative ply (13) and the target substrate caused by the activated third adhesive layer (14).

19. Transfer film (1) according to one of claims 13 to 18,
**characterised in that**
the base film (10) is a transfer film, in particular a hot stamping film, or
the base film (10) is a laminating film.

## Revendications

1. Procédé servant à fabriquer un élément de sécurité (1), dans lequel un film de base (10) est fourni dans le procédé, qui présente un premier film de support (11) et une strate décorative (13) mono- ou multicouche,
- dans lequel une première couche de colle (30) est appliquée sur un deuxième film de support (40) et une deuxième couche de colle (15) est appliquée sur la face supérieure, opposée à la strate décorative (13), du premier film de support (11) ou dans lequel la deuxième couche de colle (15) est appliquée sur la face supérieure, opposée à la strate décorative (13), du premier film de support (11) et la première couche de colle (30) est appliquée sur la deuxième couche de colle (15),
- et dans lequel le deuxième film de support (40) est appliqué sur le premier film de support (11) de telle manière que la première couche de colle (30) et la deuxième couche de colle (15) sont disposées entre le premier film de support (11) et le deuxième film de support (40),
- et dans lequel la première couche de colle (30) est activée dans une première zone (31), qui recouvre au moins en partie au moins une première zone partielle (21) du film de base (10) et la première couche de colle (30) n'est toutefois pas activée, pas prévue, est prévue ou désactivée seulement en partie dans une deuxième zone (32) jouxtant ladite zone (31),
- dans lequel le premier film de support (11) est sectionné au moins en partie le long de la ligne limite définissant l'au moins une première zone partielle (21) et séparant l'au moins une première zone partielle (21) de la deuxième zone partielle (22) du film de base (10), et
- dans lequel une deuxième partie, comprenant la deuxième zone partielle (22), du film de base (10) est retirée du deuxième film de support (40), dans lequel le film de base (10) adhère au deuxième film de support (40) du fait de la première couche de colle activée dans l'au moins une première zone partielle (21) et une première partie, comprenant l'au moins une première zone partielle (21), du film de base (10) reste sur le deuxième film de support (40).

2. Procédé selon la revendication 1,
**caractérisé en ce**
**que** différentes colles pouvant être activées en particulier différemment sont utilisées pour la première (30) et la deuxième couche de colle (15) ;
et/ou
**que** la deuxième couche de colle (15) est activée lors de l'estampage à chaud de la première partie du film de base (10) sur un substrat, en particulier
**que** l'estampage à chaud est effectué à une température allant de 80 °C à 300 °C, de manière préférée allant de 100 °C à 240 °C, de manière particulièrement préférée allant de 100 °C à 180 °C et/ou avec une pression d'estampage allant de 10 N/cm² à 10 000 N/cm², de manière préférée allant de 100 N/cm² à 5000 N/cm² et/ou pendant une durée d'estampage allant de 0,01 s à 2 s, de manière préférée allant de 0,01 s à 1 s.

3. Procédé selon l'une quelconque des revendications 1 ou 2,
**caractérisé en ce**
**que** la deuxième couche de colle (15) est séchée avant l'application du deuxième film de support (40) sur le film de base (10), et/ou
**que** la deuxième couche de colle (15) est formée à partir d'une colle thermoplastique avec une température de transition vitreuse allant de 50 °C à 150 °C, de manière préférée allant de 100 °C à 120 °C, et/ou
**que** la deuxième couche de colle (15) est appliquée avec un poids surfacique allant de 0,1 g/m² à 10 g/m², de manière préférée allant de 2 g/m² à 5 g/m².

4. Procédé selon l'une quelconque des revendications précédentes,
**caractérisé en ce**
**que** le film de base (10) présente une couche de décollement (12) disposée entre le premier film de support (11) et la strate décorative (13), qui permet la séparation de la strate décorative (13) du premier film de support (11).

5. Procédé selon l'une quelconque des revendications 1 à 3,
**caractérisé en ce**
**que** le film de base (10) présente un système de décollement (17) disposé entre le premier film de support (11) et le deuxième film de support (40), qui permet la séparation du film de base (10) du deuxième film de support (40).

6. Procédé selon la revendication 5,
**caractérisé en ce**
**que** le système de décollement (17) est appliqué soit sur le premier film de support (11) ou sur le deuxième film de support (40),
dans lequel de manière préférée soit le système de décollement (17) est appliqué sur le premier film de support (11) et la première couche de colle (30) est appliquée directement sur le deuxième film de support (40) soit la première couche de colle (30) est appliquée indirectement sur le deuxième film de support (40) de telle manière que le système de décollement (17) est appliqué directement sur le deuxième film de support (40) .

7. Procédé selon la revendication 5 ou 6,
**caractérisé en ce**
**que** le système de décollement (17) présente une épaisseur comprise entre 0,01 µm et 4 µm, de manière préférée entre 0,1 µm et 3 µm, et/ou
**que** le système de décollement (17) présente un matériau de type cire, et/ou
**que** le système de décollement (17) est réalisé de manière multicouche, dans lequel le système de décollement (17) comprend de manière préférée une couche (171) composée de cire et une couche composée d'un vernis (172), en particulier que sont utilisés en tant que vernis (172) des acrylates, des polyuréthanes ou des dérivés de cellulose, et/ou que la couche composée de vernis (172) présente une épaisseur comprise entre 0,1 µm et 3 µm, de manière préférée comprise entre 0,2 µm et 1,5 µm.

8. Procédé selon l'une quelconque des revendications précédentes,
**caractérisé en ce**
**que** la première couche de colle (30) est appliquée en une trame, en particulier en une trame avec une densité de trame allant de 40 à 80 lignes par cm,
et/ou
**qu'**est utilisée en tant que première couche de colle (30) une couche de colle pouvant être activée par un rayonnement électromagnétique, en particulier par l'exposition à une lumière UV.

9. Procédé selon l'une quelconque des revendications précédentes,
**caractérisé en ce**
**que** la strate décorative (13) et/ou le deuxième film de support (40) contiennent des repères, et les repères sont utilisés pour définir la première et la deuxième zone de la première couche de colle (30) et/ou pour définir la première et la deuxième zone partielle du film de base (10).

10. Procédé selon l'une quelconque des revendications précédentes,
**caractérisé en ce**
**qu'**après le retrait de la deuxième partie du film de base (10), le film restant est déposé avec le deuxième film de support (40) et la première partie du film de base (10) sur un substrat cible (70), une ou plusieurs premières zones partielles (21) du film de base sont appliquées sur le substrat cible (70) par l'activation d'une couche de colle (17) disposée entre la strate décorative (13) et le substrat cible (70), et le deuxième film de support (40) est retiré de la strate décorative (13) et du premier film de support (11) de la ou des nombreuses premières zones partielles appliquées du film de base (10).

11. Procédé selon l'une quelconque des revendications précédentes,
**caractérisé en ce**
**qu'**une troisième couche de colle (14) est appliquée sur le côté, opposé au premier film de support (11), de la strate décorative (13).

12. Procédé selon la revendication 11,
**caractérisé en ce**
**que** la troisième couche de colle (14) est une couche de colle thermoscellable,
et/ou
**que** la troisième couche de colle (14) est une couche de colle à froid ou une couche adhésive, et/ou
**que** la troisième couche de colle (14) est une couche de colle thermoscellable à réactivité latente.

13. Film de transfert (1), en particulier film d'estampage à chaud, servant au transfert d'un ou de plusieurs corps multicouches (23) sur un substrat cible (70), dans lequel le film de transfert (1) présente un film de base (10), qui présente un premier film de support (11) et une strate décorative (13) mono- ou multicouche, dans lequel
- le film de transfert (1) présente par ailleurs un deuxième film de support (40) avec une première couche de colle (30) et une deuxième couche de colle (15) appliquée sur la face supérieure, opposée à la strate décorative, du premier film de support (11), dans lequel la première couche de colle (30) et la deuxième couche de colle (15) sont disposées entre le premier film de support (11) et le deuxième film de support (40), et dans lequel
- la première couche de colle (30) est activée dans une première zone (31) recouvrant au moins en partie au moins une première zone partielle (21) du film de base de sorte que le film de base (10) adhère au niveau du deuxième film de support (40) dans l'au moins une première zone partielle (21), et n'est toutefois pas activée, n'est pas prévue, est prévue ou désactivée seulement en partie dans une deuxième zone partielle (22) jouxtant l'au moins une première zone partielle (21), et dans lequel
- le premier film de support (11) est sectionné le long de la ligne limite définissant l'au moins une première zone partielle (21) et séparant l'au moins une première zone partielle (21) d'une deuxième zone partielle (22) du film de base (10) et une partie, comprenant la deuxième zone partielle (22), du film de base (10) est retirée du deuxième film de support (40).

14. Film de transfert selon la revendication 13,
**caractérisé en ce**
**que** le film de base (10) comprend une couche de décollement (12) disposée entre le premier film de support (11) et la strate décorative (13), qui permet la séparation de la strate décorative (13) du premier film de support (11).

15. Film de transfert (1) selon la revendication 13,
**caractérisé en ce**
**que** le film de base (10) présente un système de décollement (17) disposé entre le premier film de support (11) et le deuxième film de support (40), qui permet la séparation du film de base (10) du deuxième film de support (40).

16. Film de transfert (1) selon la revendication 15,
**caractérisé en ce**
**que** le système de décollement (17) est appliqué soit sur le premier film de support (11) soit sur le deuxième film de support (40),
dans lequel de manière préférée soit le système de décollement (17) est appliqué sur le premier film de support (11) et la première couche de colle (30) est appliquée directement sur le deuxième film de support (40), soit la première couche de colle (30) est appliquée indirectement sur le deuxième film de support (40) de telle manière que le système de décollement (17) est appliqué directement sur le deuxième film de support (40) .

17. Film de transfert (1) selon la revendication 15 ou 16,
**caractérisé en ce**
**que** le système de décollement (17) présente une épaisseur comprise entre 0,01 µm et 4 µm, de manière préférée entre 0,1 µm et 3 µm, et/ou
**que** le système de décollement (17) présente un matériau de type cire, et/ou
**que** le système de décollement (17) est réalisé de manière multicouche, dans lequel le système de décollement (17) comprend de manière préférée une couche composée de cire (171) et une couche composée d'un vernis (172) .

18. Film de transfert (1) selon la revendication 13 à 17,
**caractérisé en ce**
**que** le film de transfert (1) présente une troisième couche de colle (14), qui est appliquée sur la face supérieure, opposée au premier film de support, de la strate décorative (13), et que la force d'adhésion provoquée par la deuxième de couche (30) activée entre le premier film de support (11) et le deuxième film de support (40) est inférieure à la force d'adhésion provoquée par la troisième couche de colle (14) activée entre la strate décorative (13) et le substrat cible.

19. Film de transfert (1) selon l'une quelconque des revendications 13 à 18,
**caractérisé en ce**
**que** le film de base (10) est un film de transfert, en particulier un film d'estampage à chaud, ou
**que** le film de base (10) est un film stratifié.
